# EUROPÄISCHE PATENTSCHRIFT

(11) **EP 2 631 184 B1**
(45) Veröffentlichungstag und Bekanntmachung des Hinweises auf die Patenterteilung: **14.09.2016**
(21) Anmeldenummer: 13156172.2
(22) Anmeldetag: 21.02.2013
(51) Int. Cl.: B64G 7/00

(54) **Fallturm, sowie Beschleunigungskapsel und Nutzlastträger für selbigen**
Drop tower, and accelerating capsule and payload carrier for the same
Tour de chute ainsi que capsule d'accélération et support de charge utile pour celle-ci

(30) Priorität: 24.02.2012 DE 202012001827 U
(43) Veröffentlichungstag der Anmeldung: 28.08.2013
(73) Patentinhaber: ZARM Fallturm-Betriebsgesellschaft mbH, 28359 Bremen (DE)
(72) Erfinder: Kaczmarczik, Ulrich, 28359 Bremen (DE)
(74) Vertreter: Eisenführ Speiser

(56) Entgegenhaltungen:
- DE-U1- 8 802 418
- JP-A- H0 624 400
- JP-A- S61 230 749
- Selig Hanns, Dittus Hansjörg, Lämmerzahl Claus: "Drop Tower Microgravity Improvement Towards the Nano-g Level for the MICROSCOPE Payload Tests", Microgravity Science and Technology, Bd. 22, Nr. 4 Oktober 2010 (2010-10), Seiten 539-549, XP002699900, ISSN: 0938-0108, DOI: 10.1007/s12217-010-9210-0 Gefunden im Internet: URL:http://rd.springer.com/content/pdf/10. 1007%2Fs12217-010-9210-0.pdf [gefunden am 2013-07-02]
- Hans J. Rath: "Der Fallturm Bremen als erdgebundenes Weltraumlabor für Experimente unter kompensierter Gravitation", Naturwissenschaften, Springer Verlag, Bd. 82 1995, Seiten 117-122, XP002699910, Gefunden im Internet: URL:http://rd.springer.com/content/pdf/10. 1007%2FBF01177271.pdf [gefunden am 2013-07-02]

## Beschreibung

Die vorliegende Erfindung betrifft einen Fallturm, insbesondere zum Durchführen von Experimenten unter Simulation reduzierter Schwerkraft, mit einem sich in dem Turm erstreckenden Innenraum, einem Nutzlastträger, der in dem Innenraum in senkrechter Richtung derart beweglich ist, dass während der Bewegung wenigstens zeitweise ein Zustand reduzierter Schwerkraft herrscht, und einer zum Umschließen des Nutzlastträgers ausgebildeten Beschleunigungskapsel, siehe XP002699900.

Ein bekannter Fallturm der vorbezeichneten Art, betrieben von der hiesigen Anmelderin, wird als Großlabor verwendet, um es Wissenschaftlern zu ermöglichen, erdgebunden wissenschaftliche Experimente unter kurzzeitiger Schwerelosigkeit durchzuführen. Unter dem Begriff der Schwerelosigkeit wird hierbei und im Folgenden eine solche Annäherung an die Schwerelosigkeit verstanden, die mit technischen Mitteln erreichbar noch erreichbar ist. Diese so genannten Freifallexperimente werden auf Nutzlastträgern aufgebaut, und die Nutzlastträger sodann innerhalb des Innenraums des Fallturms entweder im freien Fall fallen gelassen, oder senkrecht im Innenraum des Fallturms nach oben geworfen, um schließlich wieder unten im Innenraum des Fallturms aufzukommen. Während der Fall- bzw. Wurfphase wird kurzzeitig, für einen Zeitraum von bis zu knapp 10 Sekunden, ein Zustand der Schwerelosigkeit in Bezug auf den Nutzlastträger erreicht. Hierbei sind verschiedene Anlagentypen bekannt.

Es existieren Anlagen, in denen der Nutzlastträger nach dem so genannten Drag-Shield-Prinzip von einer Ummantelung vom Luftwiderstand der ihn umgebenden und vorbeiströmenden Luft abgeschirmt wird. Mit diesen Systemen ist ein Zustand reduzierter Schwerkraft erreichbar, da die Fallbewegung infolge von Strömungsverlusten vermindert ist.

Ein weiterer Anlagentyp, beispielsweise auch derjenige der hiesigen Anmelderin, ermöglicht das Erzeugen eines Vakuums im Innenraum des Turms. Der in diesem Vakuum bewegte Nutzlastträger bewegt sich nahezu vollständig im Zustand der Schwerelosigkeit, weil er in Abwesenheit von Luft nicht durch Strömungseffekte abgebremst wird. Es wirken im Fall- bzw. Wurfbetrieb Beschleunigungskräfte der Größenordnung von 10⁻⁶ g auf den Nutzlastträger. Man spricht hierbei von Mikrogravitations-Betrieb. Diese erdgebundene Art der Simulation von Schwerelosigkeit, sofern ein Freifallexperiment in diesem kurzen Zeitrahmen von unterhalb 10 Sekunden durchgeführt werden kann, ist im Vergleich zu anderen bekannten Methoden, beispielsweise auf Parabelflügen in speziell dafür vorbereiteten Flugzeugen, auf suborbitalen Flügen mit ballistischen Raketen oder auf orbitalen Einsätzen im Weltraum, insbesondere auf der Internationalen Raumstation (ISS), erheblich ökonomischer.

Bekannte Anlagentypen stoßen allerdings an ihre Auslastungsgrenzen, weil vergleichsweise viel Zeit benötigt wird, um jeden einzelnen Fall- bzw. Wurfversuch vorzubereiten und nachzubereiten. Da der Nutzlastträger während der Simulation absolut frei beweglich sein muss, wenn er sich im so genannten Freiflug befindet, ist zum Vorbereiten des Versuchs eine exakte Ausrichtung des Nutzlastträgers notwendig. Zudem müssen aufwändige Vorkehrungen getroffen werden, um den Nutzlastträger zum Ende des Experiments beschädigungsfrei aufzufangen, und dabei auch Beschädigungen des Innenraums des Turms zu verhindern. In jenen Anlagen, die zusätzlich das Erzeugen eines Vakuums im Innenraum des Turms vorsehen, wird zusätzlich pro Versuch viel Zeit beansprucht, um vor dem Experiment das Vakuum zu erzeugen und nach dem Experiment den Turm (bis auf Umgebungsdruck) zu belüften, so dass das Innere des Turms für das Bergen des Nutzlastträgers zugänglich wird. Die Vor- und Nachbereitungszeiten betragen bei den bekannten Anlagen teilweise bis zu 4 Stunden pro Versuch.

Es sind unter diesen Voraussetzungen nur schwerlich Versuchsreihen durchzuführen, die zum Erlangen statistischer Aussagekraft eine gewisse Mindestzahl von Wiederholungen unter gleichen Versuchsbedingungen benötigen. Die bekannten Anlagen sind aufgrund der geringen Anzahl verfügbarer Zeitfenster über lange Zeiträume ausgebucht.

Aus der DE 88 02 418 U1 ist beispielsweise eine Falleinrichtung mit einem Linearantrieb für eine regelbare Bewegung einer Beschleunigungskapsel in senkrechter Richtung der Falleinrichtung bekannt.

Vor diesem Hintergrund lag der vorliegenden Erfindung die Aufgabe zugrunde, einen Fallturm anzugeben, der einen zeitökonomischeren Betrieb der Anlage ermöglicht, ohne dabei Einbußen bei der Simulationsgüte reduzierter Schwerkraft hinnehmen zu müssen.

Die Erfindung löst die ihr zugrundeliegende Aufgabe bei einem Fallturm der eingangs bezeichneten Art, indem die Beschleunigungskapsel , welche mittels eines Linearantriebs senkrecht geregelt bewegbar ist durch eine Koppeleinrichtung, welche dazu eingerichtet ist, den Nutzlastträger und die Beschleunigungskapsel selbsttätig kraft- und/oder formschlüssig zu koppeln, wenn die von dem Linearantrieb geregelte Antriebskraft entgegen der Schwerkraft einen Wert größer null annimmt, und selbsttätig voneinander zu entkoppeln, wenn die von dem Linearantrieb geregelte Antriebskraft entgegen der Schwerkraft einen Wert kleiner oder gleich null annimmt. Der geregelte Linearantrieb ermöglicht es, den Nutzlastträger samt Beschleunigungskapsel über den gesamten Versuchszeitraum geführt zu bewegen. Die von dem Linearantrieb regelbaren Geschwindigkeiten sind sehr präzise vorgebbar, so dass der freie Fall des Nutzlastträgers bzw. senkrechte Wurf unter Bedingungen reduzierter Schwerkraft bis hin zur Schwerelosigkeit (Mikrogravitation) mit hoher Güte simulierbar ist. Darüber hinaus weist der erfindungsgemäße Fallturm eine Koppeleinrichtung auf, welche dazu eingerichtet ist, den Nutzlastträger und die Beschleunigungskapsel selbsttätig kraft- und/oder formschlüssig zu koppeln, wenn die von dem Linearantrieb geregelte Antriebskraft entgegen der Schwerkraft einen Wert größer null annimmt, und selbsttätig voneinander zu entkoppeln, wenn die von dem Linearantrieb geregelte Antriebskraft entgegen der Schwerkraft ein Wert kleiner oder gleich null annimmt. Auf diese Weise ermöglicht die Koppeleinrichtung, dass sich die Beschleunigungskapsel und der Nutzlastträger beim Übergang in den freien Wurf bzw. freien Fall selbsttätig voneinander lösen, d.h. ohne eine zuvor erfolgte Schaltfunktion und im Gegenzug während der Beschleunigungsphase und Verzögerungsphase miteinander gekoppelt sind, so dass beide Elemente gleichermaßen beschleunigt und verzögert werden. Dadurch, dass der Linearantrieb stets mit der Beschleunigungskapsel zusammenwirkt und diese den Nutzlastträger umschließt, ist ein Neuausrichten der Beschleunigungskapsel vor und nach den Fall- bzw. Wurfversuchen nicht mehr erforderlich. Unmittelbar nach Beendigung eines Fall- bzw. Wurfversuchs ist die Beschleunigungskapsel zudem durch den Linearantrieb wieder in eine Startposition bringbar.

Die Erfindung wird dadurch vorteilhaft weitergebildet, dass die Beschleunigungskapsel zum druckdichten oder wenigstens aerodynamischen Umschließen des Nutzlastträgers ausgebildet ist. Hierbei macht sich die Erfindung zunutze, dass durch das druckdichte Umschließen des Nutzlastträgers mittels der Beschleunigungskapsel eine vollständige Isolation von der die Beschleunigungskapsel umgebenden und an dieser vorbeiströmenden Luft erfolgt. Besonders vorteilhaft ist in dieser Ausgestaltung in Kombination mit dem vorstehend beschriebenen geregelten Linearantrieb, da dieser eine Bewegung der Beschleunigungskapsel und somit des Nutzlastträgers mit exakt der gleichen Geschwindigkeit ermöglicht, die beim freien Fall im Vakuum erreicht wird, ohne dass tatsächlich in dem die Beschleunigungskapsel umgebenden Innenraum des Fallturms Vakuum anliegen muss. Die Vorzüge des apparativ einfachen Aufbaus nach dem DragShield-Prinzip führen in Kombination mit dem erfindungsgemäßen geregelten Linearantrieb zu einem Simulationssystem, welches Schwerelosigkeit auch in Abwesenheit eines Vakuums im Fallturm hoch präzise einstellen kann. Der geregelte Antrieb der Beschleunigungskapsel ermöglicht insbesondere ein Überwinden der Strömungswiderstände im Turm. Hierdurch ergibt sich in Verbindung mit der geführten Bewegung des Linearantriebs eine sehr deutliche Zeitersparnis von mehreren Stunden pro Fall bzw. Wurf. In einer vorteilhaften Weiterbildung ist das Innere der Beschleunigungskapsel mittels einer Einrichtung zum Erzeugen von Unterdruck evakuierbar. Hierdurch wird eine weitere Minimierung von Störeinflüssen auf den Nutzlastträger erzeugt, da in diesem Fall auch die in der Beschleunigungskapsel befindliche, und bei dem Wurfversuch mitbewegte Luft aus der Umgebung des Nutzlastträgers entfernt werden kann.

Weiter vorzugsweise weist die Beschleunigungskapsel an ihrer äußeren Verkleidung Bereiche mit in Bewegungsrichtung reduziertem Strömungswiderstand auf. Dies betrifft insbesondere die im Betrieb obere und untere Stirnfläche der Beschleunigungskapsel, welche vorzugsweise aerodynamisch optimierte Verkleidungen aufweist. Beispielsweise können die Ober- und Unterseite mit projektilförmigen Kappen versehen sein. Hierdurch werden die Luftwiderstände in senkrechter Richtung auf- und/oder abwärts reduziert, was eine Reduzierung der Antriebsleistung des Linearantriebs ermöglicht.

Gemäß einer weiteren bevorzugten Ausführungsform der Erfindung weist der Fallturm eine oder mehrere Führungsmittel in dem Innenraum des Fallturms auf, mittels derer die Beschleunigungskapsel beweglich geführt ist. Vorzugsweise sind die Führungsmittel als magnetische, elektromagnetische oder luftgelagerte Führung ausgebildet. Dies hat den Vorteil, dass die Führung berührungsfrei erfolgt. Alternativ oder zusätzlich können zusätzliche Führungsnuten und korrespondierende Führungsschienen jeweils an Kapsel-und Innenraum-Innenwand vorgesehen sein, um im Notfall ein Verkanten der Beschleunigungskapsel im Innenraum des Turms zu vermeiden. Weitere bevorzugte Führungsmittel umfassen ein oder mehrere Rollenlager und/oder Gleitlager.

In einer weiteren vorteilhaften Ausführungsform der vorliegenden Erfindung weist der Linearantrieb einen oder mehrere Linearmotoren, vorzugsweise Langstator-Linearmotoren, auf, wobei die Beschleunigungskapsel vorzugsweise als Aktor ausgebildet ist oder eine korrespondierende Anzahl von Aktoren aufweist. Im Sinne einer möglichst gleichmäßigen und effizienten Verteilung der Antriebskräfte des Linearantriebs auf die Beschleunigungskapsel sind vorzugsweise mehrere Antriebseinheiten vorgesehen, die entlang des Umfangs des Innenraums des Turms verteilt um die Beschleunigungskapsel herum angeordnet sind. Die Beschleunigungskapsel weist vorzugsweise für jede der Antriebseinheiten ein Beschleunigungsschwert oder sonstiges Element auf, welches von dem jeweiligen, der Antriebseinheit zugeordneten Stator in einem Wanderfeld auf und ab bewegbar ist. Ein synchroner Betrieb mehrerer Antriebseinheiten ist durch entsprechende Steuerungsmaßnahmen ohne Weiteres möglich. In bevorzugten Alternativen weist der Antrieb einen permanent erregten oder elektrisch erregten Synchronmotor auf. Gemäß einer weiteren bevorzugten Ausführungsform weist der Antrieb einen Reluktanzmotor auf.

Der Linearantrieb ist bei einem Fallturm gemäß der Erfindung vorzugsweise dazu eingerichtet, eine Antriebskraft entgegen der Schwerkraft auf die Beschleunigungskapsel aufzubringen und in drei oder mehr zeitlich aufeinander folgenden Phasen derart zu regeln, dass die Beschleunigungskapsel in einer ersten Phase entgegen der Schwerkraft auf eine Initialgeschwindigkeit v₀ beschleunigt wird oder in eine Initialhöhe verfahren wird, in der v₀ den Wert null annimmt, in einer zweiten Phase gleichmäßig in Richtung der Schwerkraft bis zum Erreichen einer Endgeschwindigkeit v₁ beschleunigt wird und in einer dritten Phase entgegen der Schwerkraft von v₁ in den Stillstand verzögert wird. Bei einem Regelbetrieb in mehr als drei Phasen ist vorzugsweise vorgesehen, beispielsweise anstelle der zweiten Phase mehrere weitere Phasen mit jeweils gleichmäßiger, von den übrigen Phasen verschiedener Beschleunigung einzuregeln. Hierdurch können mittels Linearbeschleunigung Übergänge von einem Schwerezustand in einen anderen Schwerezustand simuliert werden, ähnlich wie in einer Zentrifuge.

In einer bevorzugten Ausführungsform ist der Linearantrieb dazu eingerichtet, die Antriebskraft in der zweiten Phase derart zu regeln, dass die Beschleunigung der Beschleunigungskapsel in Richtung der Schwerkraft in einem Bereich unterhalb einfacher Erdbeschleunigung und oberhalb null liegt (>0 g bis <1 g). Bei diesem Regelmodus des Linearantriebs ist eine Simulation reduzierter Schwerkraft möglich. Die simulierte reduzierte Schwerkraft ergibt sich daraus, dass der Fall bzw. Wurf des Nutzlastträgers relativ zum freien Fall bzw. Wurf durch eine konstante Antriebskraft entgegen der Schwerkraft, mit anderen Worten also eine der Schwerkraft entgegengesetzt wirkende Antriebskraft, verzögert wird. Aus der Differenz zwischen der aufgrund der Erdbeschleunigung auf den Nutzlastträger wirkenden Gewichtskraft und der dieser entgegengesetzten Antriebskraft berechnet sich die zu simulierende, verbleibende Schwerkraft. Durch Einregeln einer gewünschten, auf die Masse des Nutzlastträgers abgestimmten Antriebskraft lässt sich auf diese Weise konkret und präzise eine gewünschte reduzierte Schwerkraft einstellen. Besonders vorteilhaft ist im Bereich der wissenschaftlichen Untersuchungen ein Wertebereich, welcher die zu simulierende Schwerkraft auf extraterrestrischen Himmelskörpern betrifft, beispielsweise die Schwerkraft auf dem Mond oder Mars. Die Schwerkraft auf dem Mars betrifft ca. 1/3 der Schwerkraft auf der Erde, während die Schwerkraft auf dem Mond ca. 1/6 der Schwerkraft auf der Erde beträgt.

In einer alternativen bevorzugten Ausführungsform des Fallturms ist der Linearantrieb dazu eingerichtet, die Antriebskraft in der zweiten Phase derart zu regeln, dass die Beschleunigung der Beschleunigungskapsel in Richtung der Schwerkraft im Wesentlichen der einfachen Erdbeschleunigung entspricht. In diesem Regelmodus wird der Zustand der Schwerelosigkeit simuliert. Dieser wird auch als Mikrogravitations-Betrieb bezeichnet. Die Antriebskraft ist in dieser Phase im Wesentlichen gleich null, und sowohl die Beschleunigungskapsel als auch der Nutzlastträger werden ausschließlich von der Schwerkraft erfasst. Der Linearantrieb muss lediglich korrektiv tätig sein, um sicherzustellen, dass keine Relativgeschwindigkeiten zwischen der Beschleunigungskapsel und dem sich frei in der Beschleunigungskapsel bewegenden Nutzlastträger auftreten. Um die optional im Innenraum befindliche Luft (in Abwesenheit eines Vakuums) zu kompensieren, ist der Linearantrieb dazu eingerichtet, eine Antriebskraft in Richtung der Schwerkraft auszuüben, so dass die Beschleunigungskapsel einen Geschwindigkeitsverlauf nimmt, der dem freien Fall im Vakuum entspricht. Die Regelung des Linearantriebs des erfindungsgemäßen Antriebs sieht demgemäß vor, dass sowohl Antriebskräfte in Richtung der Schwerkraft als auch entgegen der Schwerkraft eingeregelt werden, um die Beschleunigungskapsel mit einem dem freien Fall unter Vakuum entsprechenden Geschwindigkeitsverlauf zu führen.

Vorzugsweise ist der Linearantrieb dazu eingerichtet, die Antriebskraft derart zu regeln, dass diese in der ersten und/oder dritten Phase entgegen der Schwerkraft in einem ersten Zeitabschnitt einen ansteigenden Verlauf nimmt, in einem zweiten Abschnitt einen wesentlichen konstanten Wert annimmt, und in einem dritten Abschnitt einen abnehmenden Verlauf annimmt. Alternativ hierzu wird kein zweiter Abschnitt mit einem konstanten Wert vorgesehen, so dass ein Zeitabschnitt mit ansteigendem Beschleunigungsverlauf direkt von einem Zeitabschnitt mit abnehmendem Beschleunigungsverlauf abgelöst wird. Der Vorteil des Betriebs mit einem so genannten Halteabschnitt als zweitem Zeitabschnitt liegt darin, dass ein Beschleunigungsvorgang mit insgesamt reduzierter Maximalbeschleunigung gefahren werden kann, der eine sanftere Beschleunigung der Beschleunigungskapsel und des Nutzlastträgers auf die Initialhöhe oder Initialgeschwindigkeit ermöglicht. Die Höhe dieser Maximalbeschleunigung kann sodann unter Berücksichtigung möglicherweise sensibler Versuchselemente in und an dem Nutzlastträger vorgegeben werden.

Die Koppeleinrichtung weist vorzugsweise ein mit dem Nutzlastträger verbundenes erstes Koppelglied, und ein mit der Beschleunigungskapsel verbundenes zweites Koppelglied auf, wobei das erste Koppelglied mit dem zweiten Koppelglied in Auflage bringbar ist. Durch die Koppelung in Auflageform ist automatisch gewährleistet, dass sich das erste Koppelglied und das zweite Koppelglied voneinander lösen, wenn keine Antriebskraft entgegen der Schwerkraftrichtung auf die Beschleunigungskapsel wirkt, weil die Massenträgheit des Nutzlastträgers nach Wegfall der Antriebskraft zu einem Ablösen des ersten Koppelglieds von dem zweiten Koppelglied führt.

Weiter vorzugsweise weist das erste Koppelglied eine kugelförmige oder teilkugelförmige Auflagefläche auf, und das zweite Koppelglied weist besonders bevorzugt eine korrespondierend geformte Vertiefung zur Aufnahme der Auflagefläche auf. Die Vertiefung in dem zweiten Koppelglied kann als einfache zylindrische Ausnehmung mit einer ringförmigen Kante, ausgebildet sein, die vorzugsweise eine Fase aufweist. Besonders bevorzugt ist es, wenn das zweite Koppelglied eine der Kugelform oder Teilkugelform des ersten Koppelglieds entsprechende teilkugelförmige Ausnehmung aufweist, in der das erste Koppelglied wie in einer (offenen) Gelenkpfanne zur Auflage kommt. Die Ausführungsform insbesondere des ersten Koppelglieds mit einer teilkugelförmigen Auflagefläche hat den besonderen Vorteil, dass das erste Koppelglied und das zweite Koppelglied sich relativ zueinander selbst zentrieren, wenn sie in Auflageposition befindlich sind, und dass weiterhin ein Ausgleich von Nick-, Roll-, oder Gierbewegungen, sowie gegebenenfalls der Coriolisabweichung ermöglicht ist. Dabei ist der Nutzlastträger besonders bevorzugt mittels des ersten Koppelglieds in das zweite Koppelglied der Beschleunigungskapsel einhäng bar. Hierdurch wird erreicht, dass der Nutzlastträger und die Beschleunigungskapsel nur eine Koppelstelle miteinander aufweisen und nur eine Kopplungsebene im Zusammenspiel zwischen diesen beiden Elementen zu kontrollieren ist. Dies sorgt für einen einfachen und robusten Aufbau.

Gemäß einer weiteren bevorzugten Ausführungsform sind zusätzlich ein drittes Koppelglied und ein viertes Koppelglied vorgesehen, wobei das dritte Koppelglied mit dem Nutzlastträger verbunden ist und das vierte Koppelglied mit der Beschleunigungs-kapsel. Vorzugsweise ist diese zusätzliche Koppeleinrichtung unterhalb des Nutzlastträgers angeordnet. Hierdurch wird eine beidseitige Abstützung oberhalb und unterhalb des Nutzlastträgers gewährleistet, was eine höhere Stabilität während der Beschleunigungs- und/oder Verzögerungsphase ermöglicht, was insbesondere dann relevant sein kann, wenn hohe Maximalbeschleunigungen gefahren werden. Unter einer hohen Beschleunigung wird insbesondere das 1,5-fache oder mehr als das 1,5-fache der Erdbeschleunigung verstanden. Das dritte Koppelglied ist vorzugsweise mit dem vierten Koppelglied in Auflage bringbar, wobei weiter vorzugsweise das dritte Koppelglied eine kugelförmige oder teilkugelförmige Auflagefläche aufweist. Besonders bevorzugt weist das vierte Koppelglied in jenem Fall eine korrespondierend geformte Vertiefung zur Aufnahme der Auflagefläche auf. Diese kann wie vorstehend in Bezug auf das zweite Koppelglied beschrieben ausgebildet sein.

Bei einer weiteren bevorzugten Ausführungsform weist der Fallturm einen oder mehrere Sensoren, vorzugsweise einen oder mehrere Entfernungssensoren, zur Erfassung eines Abstands und/oder einer Abstandsänderung zwischen Nutzlastträger und Beschleunigungskapsel in senkrechter Richtung auf. Der oder die Sensoren sind vorzugsweise an dem Nutzlastträger und/oder an der Beschleunigungskapsel angebracht. Als Sensoren kommen insbesondere optische Sensoren in Betracht.

Die Erfindung sieht vor, dass die Koppeleinrichtung ein Dämpfungs- und/oder Federelement aufweist, wobei mittels dem Dämpfungs- und/oder Federelement der Nutzlastträger Beschleunigungskräfte aufnehmend mit der Beschleunigungskapsel koppelbar ist. Stoßartige Berührungen, die Erschütterungen des Nutzlastträgers und damit Verfälschungen der Versuchsbedingungen, sowie im Extremfall gegebenenfalls Beschädigungen an empfindlichen Versuchsaufbauten verursachen können, lassen sich dadurch auf vorteilhafte Weise vermeiden.

Je größer der Abstand zwischen dem Nutzlastträger und der Beschleunigungskapsel ist, desto geringer sind die mit dem Dämpfungs- und/oder Federelement übertragenen Kräfte. Bevorzugt ist das Dämpfungs- und/oder Federelement zwischen dem ersten Koppelglied des Nutzlastträgers und dem zweiten Koppelglied der Beschleunigungskapsel angeordnet. Damit ist eine konstruktiv einfache mechanische Kopplung zwischen dem Nutzlastträger und der den Nutzlastträger umgebenen Hülle der Beschleunigungskapsel bewirkt. Dabei ist die Federkraft des Dämpfungs- und/oder Federelementes vorzugsweise derart eingestellt bzw. gewählt, dass das erste Koppelglied und das zweite Koppelglied der Beschleunigungskapsel kraftübertragend gekoppelt, vorzugsweise eingehängt, sind, wenn auf den Nutzlastträger wenigstens die normale Erdbeschleunigung einwirkt. Bei simulierter reduzierter Schwerkraft, wenn die vom Linearantrieb geregelte Antriebskraft entgegen der Schwerkraft eine Beschleunigung zwischen 0 und 1 g bewirkt, ist eine mechanische Kopplung zwischen der Beschleunigungskapsel und dem Nutzlastträger vorzugsweise nur über das Dämpfungs- und/oder Federelement gegeben. Vorzugsweise ist die Federkonstante des Dämpfungs- und/oder Federelements derart gewählt, dass in diesem Bereich reduzierter simulierter Schwerkraft der Nutzlastträger und die Beschleunigungskapsel mittels der Federkraft leicht auseinander gedrückt werden, so dass nur die Kopplung über das Dämpfer- und/oder Federelement gegeben ist. In einer bevorzugten Ausführungsform kann das Dämpfungs- und/oder Federelement zwischen zwei in einer horizontalen Ebene voneinander getrennten Bauteilen des zweiten Koppelgliedes angeordnet sein.

Das Dämpfungs- und/oder Federelement ist als Verformungskörper ausgebildet, der in Abhängigkeit der auf ihn einwirkenden Beschleunigungskräfte komprimierbar und dekomprimierbar ist. Der Einsatz eines Verformungskörpers stellt eine vorteilhafte konstruktive Alternative zu einem sich aus einer Feder und einem Dämpfer zusammensetzenden Dämpfungs- und/oder Federelement dar. Um eine elastische Kopplung zwischen dem Nutzlastträger und der Beschleunigungskapsel zu realisieren, ist der Verformungskörper bevorzugt aus einem elastische Eigenschaften aufweisenden Material ausgebildet. In Abhängigkeit der auf den Verformungskörper einwirkenden Beschleunigungskräfte wird der Verformungskörper in unterschiedlichem Maße komprimiert. Als Material für den beispielsweise als Vollkörper ausgebildeten Verformungskörper findet vorzugsweise ein weichelastischer Kunststoff oder Gummiwerkstoff Anwendung.

Die Erfindung sieht vor, dass der Verformungskörper ein Hohlkörper ist, der einen Anschluss für eine fluidleitende Verbindungsleitung mit einem Speicherbehälter aufweist. Mit einem als Hohlkörper ausgebildeten Verformungskörper lässt sich ein vorteilhaft großer Verformungsgrad umsetzen, was eine gefederte bzw. gedämpfte Bewegung von Nutzlastträger und Beschleunigungskapsel zueinander über eine ausreichend große Wegstrecke ermöglicht. In Abhängigkeit von den auf den Verformungskörper einwirkenden Kräfte wird das im Körperinneren befindliche Fluid, wie z.B. ein Gas oder eine Flüssigkeit, aus dem Körperinneren in den Speicherbehälter gedrückt bzw. strömt wieder vom Speicherbehälter in das Körperinnere über. Der dem einen oder den mehreren Verformungskörpern über die Verbindungsleitung angeschlossene Speicherbehälter weist vorzugsweise eine feste/steife oder flexible/elastische Behälterhülle. Die Behälterhülle ist insbesondere aus einem metallischen Werkstoff oder ähnlich wie der Verformungskörper aus einem weichelastische Eigenschaften aufweisenden Kunststoff oder Gummiwerkstoff ausgebildet. Unabhängig von der Ausgestaltung des Verformungskörpers wird die mechanische Kopplung zwischen dem Nutzlastträger und der Beschleunigungskapsel aufgehoben, wenn die vom Linearantrieb geregelte Antriebskraft entgegen der Schwerkraft einen Wert kleiner oder gleich 0 annimmt. In diesem Falle schwebt der Nutzlastträger dann frei innerhalb der Beschleunigungskapsel.

Bevorzugt ist in der Verbindungsleitung eine Fördereinrichtung, vorzugsweise eine Förderpumpe, für eine gesteuerte Volumenänderung des Hohlkörpers angeordnet. Damit lässt sich das Volumen des als Hohlkörper ausgebildeten Verformungskörpers gezielt steuern und damit gezielt Einfluss auf dessen Feder- und Dämpfungseigenschaften nehmen. Die Fördereinrichtung in der Verbindungsleitung zwischen Verformungskörper und Speicherbehälter ist dazu eingerichtet, das Förderfluid, wie z.B. ein Gas oder eine Flüssigkeit, in beide Strömungsrichtungen der Verbindungsleitung zu fördern. Um eine gesteuerte Volumenänderung des Hohlkörpers vornehmen zu können, finden z.B. Messmittel Anwendung, vorzugsweise ein oder mehrere Drucksensoren, mittels derer die physikalischen Zustandsgrößen innerhalb des Verformungskörpers und des Speicherbehälters vorteilhaft erfassbar sind.

In einer weiteren bevorzugten Ausführungsform ist der Linearantrieb dazu eingerichtet, die Antriebskraft auf die Beschleunigungskapsel in Abhängigkeit des von dem Sensor oder den Sensoren erfassten Abstandes und/oder der erfassten Abstandsänderung zu regeln, vorzugsweise derart, dass der Abstand der zweiten Phase einen vorbestimmten Wert annimmt oder in einem vorbestimmten Wertebereich bleibt. Nach dem Entkoppeln des Nutzlastträgers von dem Beschleunigungsstab wird entweder selbsttätig aufgrund der Massenträgheit oder durch gezielten Antrieb der Beschleunigungskapsel ein vorab definierter oder kalibrierter Wert bzw. Wertebereich eingestellt, der einem bestimmten Abstand zwischen Nutzlastträger und Beschleunigungskapsel entspricht. In diesem Zustand ist das Koppelglied bzw. sind die Koppelglieder, die mit dem Nutzlastträger verbunden sind, um einen bestimmten Betrag von den korrespondierenden Koppelgliedern der Beschleunigungskapsel beabstandet. Durch ständiges Erfassen des Abstandes oder durch Erfassen von Abstandsänderungen wird es ermöglicht, den Antrieb der Beschleunigungskapsel so nachzuregeln, dass die Beschleunigungskapsel im Gleichflug mit dem Nutzlastträger mitbewegt wird, ohne diesen zu berühren.

In einer vorteilhaften Weiterbildung der Erfindung ist das zweite Koppelglied, und gegebenenfalls auch das vierte Koppelglied, in horizontaler Richtung vorzugsweise zweiachsig verfahrbar. Zum Verfahren des zweiten Koppelgliedes, und optional auch des vierten Koppelglieds, sind vorzugsweise ein oder mehrere Aktoren vorgesehen, wobei das zweite Koppelglied (und/oder das vierte Koppelglied) und/oder die Beschleunigungskapsel vorzugsweise einen oder mehrere Beschleunigungssensoren zur Erfassung einer Beschleunigung in horizontaler Richtung aufweisen, und wobei die Aktoren besonders bevorzugt dazu eingerichtet sind, das zweite Koppelglied in Abhängigkeit der erfassten horizontalen Beschleunigung zu verfahren. Hierbei sind die Aktoren insbesondere dazu eingerichtet, von außen auf die Beschleunigungskapsel aufgebrachte Beschleunigungen in horizontaler Richtung zu kompensieren. Hierdurch wird ein Ausgleich von Schienenfehlern, Rüttelbewegungen etc. ermöglicht, die durch das Antriebssystem des Linearantriebs eingebracht werden können. Als Sensortyp für den oder die Beschleunigungssensoren sind beispielsweise so genannte Servo-Beschleunigungssensoren vorgesehen.

Die Erfindung betrifft weiterhin eine Beschleunigungskapsel nach Anspruch 12 zur Verwendung in einem Fallturm, insbesondere in einem Fallturm nach einer der vorstehend beschriebenen bevorzugten Ausführungsformen.

Die Erfindung löst die ihr zugrunde liegende Aufgabe bei einer Beschleunigungskapsel der vorstehend genannten Art dadurch, dass die Beschleunigungskapsel zum, vorzugsweise druckdichten oder wenigstens aerodynamischen Umschließen eines Nutzlastträgers ausgebildet ist und mittels eines Linearantriebs in einem Innenraum des Fallturms senkrecht geregelt bewegbar ist. Weiter vorzugsweise ist in der Beschleunigungskapsel ein Nutzlastträger angeordnet und mittels einer Koppeleinrichtung mit der Beschleunigungskapsel koppelbar, wobei die Kopplungseinrichtung dazu eingerichtet ist, den Nutzlastträger und die Beschleunigungskapsel kraft- und/oder formschlüssig zu koppeln, wenn die von dem Linearantrieb des Fallturms geregelte Antriebskraft entgegen der Schwerkraft einen Wert größer null annimmt, und den Nutzlastträger und die Beschleunigungskapsel voneinander zu entkoppeln, wenn die von dem Linearantrieb geregelte Antriebskraft entgegen der Schwerkraft einen Wert kleiner oder gleich null annimmt. Die Beschleunigungskapsel ist gemäß bevorzugter Ausführungsform ferner entsprechend der vorstehend unter Bezugnahme auf den erfindungsgemäßen Fallturm beschriebenen Merkmale weitergebildet.

Die Erfindung betrifft weiterhin einen Nutzlastträger nach Anspruch 13 zur Verwendung in einem Fallturm, insbesondere in einem Fallturm nach einer der vorstehend beschriebenen bevorzugten Ausführungsformen.

Die Erfindung löst die ihr zugrunde liegende Aufgabe bei einem Nutzlastträger der vorstehend bezeichneten Art dadurch, dass der Nutzlastträger mittels einer Koppeleinrichtung mit einer Beschleunigungskapsel, insbesondere einer Beschleunigungskapsel nach einer der vorstehend beschriebenen bevorzugten Ausführungsformen koppelbar ist, wobei die Kopplungseinrichtung dazu eingerichtet ist, den Nutzlastträger und die Beschleunigungskapsel kraft- und/oder formschlüssig zu koppeln, wenn die von einem Linearantrieb des Fallturms geregelte Antriebskraft entgegen der Schwerkraft einen Wert größer null annimmt, und den Nutzlastträger und die Beschleunigungskapsel voneinander zu entkoppeln, wenn die von dem Linearantrieb geregelte Antriebskraft entgegen der Schwerkraft einen Wert kleiner oder gleich null annimmt.

Nach einer vorteilhaften Weiterbildung der Erfindung zeichnet sich der Nutzlastträger durch ein Trägerelement aus, weiches parallel zueinander ausgerichtete Längsstützen und etwa quer zu den Längsstützen verlaufende Plattenkörper aufweist, wobei die Längsstützen an der Umfangsfläche der Plattenkörper angeordnet sind. Die vorzugsweise vier oder mehr parallel und in vorbestimmten Abständen zueinander ausgerichteten Längsstützen bilden eine Basis für das Trägerelement, wobei die Plattenkörper insbesondere zwischen den symmetrisch zueinander angeordneten Längsstützen in unterschiedlichen Höhen übereinander angeordnet werden. Die Plattenkörper, auch als Montageplatten bezeichnet, weisen eine achteckige Grundform auf, wobei die Längsstützen an einander gegenüberliegenden Längsseiten des Plattenkörpers vorzugsweise reversibel lösbar sind. Bevorzugt werden zur Montage der Plattenkörper an den Längsstützen Montagewinkel eingesetzt, welche eine sichere Kraftübertragung bzw. -einleitung zwischen den Längsstützen und den Montageplatten gewährleisten. Die Plattenkörper weisen Abmessungen von ungefähr 1.000 mm x 870 mm auf. Die parallel zueinander angeordneten Längsstützen weisen eine Länge von mindestens zwei Metern auf, so dass mehrere Plattenkörpers in der Höhe parallel zueinander versetzt zwischen den Längsstützen ausgerichtet werden können.

Eine alternative Ausgestaltung der Erfindung sieht vor, dass das Trägerelement des Nutzlastträgers eine Gitterstruktur mit einer Vielzahl vorzugsweise koppelbarer und entkoppelbarer, also reversibel lösbar aneinandergereihter, quaderförmiger Gitterteile aufweist, welche untereinander verbunden sind. Jedes Gitterteil des Trägerelementes setzt sich aus mehreren, vorzugsweise wenigstens zwölf, Streben zusammen, weiche die Kanten eines die Form eines Kubus aufweisenden Gitterteiles ausbilden. Bevorzugt ist jede Strebe an einem ihrer Enden mit wenigstens zwei rechtwinklig dazu angeordneten bzw. verlaufenden Streben verbunden. Um die Steifigkeit der einzelnen Gitterteile zu erhöhen, ist gemäß einer alternativen Ausführungsform vorgesehen, die Gitterteile mit Diagonalstreben auszurüsten.

An der Außenseite der Gitterteile und/oder im Inneren mindestens eines Gitterteiles ist vorzugsweise ein Plattenkörper angeordnet, auf dem die Versuchsaufbauten montiert werden. Die vorzugsweise quaderförmige Gesamtstruktur des Trägerelementes ermöglicht die Montage von Versuchsaufbauten an den insbesondere vier gleich langen Längsseiten des Trägerelementes. Die dabei sowohl an den Gitterteilen montierten Plattenkörper als auch gemäß einer alternativen Ausführungsform zwischen den parallel zueinander ausgerichteten Längsstützen montierten Plattenkörper weisen bevorzugt einen Sandwich-Aufbau aus mehreren Schichten auf. Bevorzugt weist jeder Plattenkörper einen dreischichtigen Aufbau bestehend aus zwei äußeren Deckschichten und einem dazwischen angeordneten Kernmaterial auf. Die Deckschichten werden vorzugsweise aus einem Aluminiumwerkstoff gebildet, wobei die Materialdicke etwa 5 mm beträgt. Als Kernmaterial kommen z.B. Holzwerkstoffe, Metall oder Kunststoffschäume zur Anwendung. Bevorzugt weist das Kernmaterial eine Wabenstruktur auf, wobei die Wabenstruktur mithilfe beispielsweise zwei oder mehreren übereinander geschichteten und miteinander verbundenen Wabenblechen erzeugt ist.

Vorzugsweise weisen die Plattenkörper entlang ihrer Umfangsflächen einen Kabelkanal auf, der auf der Umfangsfläche außen vorstehend angeordnet ist oder in Form einer Vertiefung an der Umfangsfläche in einer der Schichten der Plattenkörper eingebracht ist. Damit ist ein vereinfachtes Verlegen der für Messreihen notwendigen Datenleitungen oder der zur Stromversorgung der Versuchsaufbauten benötigten elektrischen Leitungen erreicht. Gleichzeitig sind die Leitungen in den Kabelkanälen vorteilhaft arretiert, womit ein unbeabsichtigtes Lösen der Leitung am erfindungsgemäß ausgebildeten Trägerelement während eines Wurf- bzw. Fallversuches vermieden wird. Die Kabelkanäle sind beispielsweise entlang des gesamten Umfangs oder auch nur abschnittsweise an einer Umfangsfläche eines zwischen den Längsstützen angeordneten Plattenkörpers oder eines an der Außenseite der Gitterstruktur des Trägerelementes angeordneten Plattenkörpers vorgesehen.

Nach einer Weiterbildung der Erfindung ist ein Trägerelement vorgesehen, welches mehrere, parallel zu seiner Zentralachse verlaufende Piattenkörper aufweist, die unter vorbestimmten Winkeln miteinander verbunden sind, wobei die Plattenkörper jeweils einen Sandwich-Aufbau aufweisen. Die das Trägerelement ausbildenden Plattenkörper verlaufen insbesondere mit ihren Längsachsen quer bzw. in einem rechten Winkel zueinander. Eine bevorzugte Ausgestaltung sieht vor, dass das Trägerelement vier Plattenkörper aufweist, die jeweils in einem rechten Winkel zueinander im gleichen Abstand zur Zentralachse des Trägerelements angeordnet sind. Das Trägerelement hat bezogen auf seinen Querschnitt eine Rechteckform. In einer weiteren alternativen Ausführungsform weist das Trägerelement eine Zentralachse auf, von der sich aus drei oder mehr Plattenkörper und parallel zur Zentralachse radial nach außen erstrecken. Im Bereich der Zentralachse des Trägerelementes ist ein die Plattenkörper untereinander verbindender Verbindungsbereich ausgebildet. Die Plattenkörper sind dabei jeweils gleichmäßig verteilt derart um die Zentralachse des Trägerelementes herum angeordnet, dass zwei zueinander benachbarte Plattenkörper jeweils ein identisches Winkelmaß zueinander aufweisen. Eine bevorzugte Ausführungsform sieht vier jeweils rechtwinklig zueinander angeordnete Plattenkörper vor, deren sich radial nach außen erstreckenden Längsseiten zudem durch Längsstützen verstärkt sind, die jeweils auf beiden Seiten über die Plattenkörperebenen vorstehen.

Die Erfindung wird im Folgenden anhand bevorzugter Ausführungsformen und unter Bezugnahme auf die beigefügten Figuren näher beschrieben. Hierbei zeigen:
- Figur 1: eine schematische Querschnittsansicht eines Fallturms gemäß der vorliegenden Erfindung,
- Figur 2: eine schematische Querschnittsansicht einer nicht beanspruchten Beschleunigungskapsel mit darin befindlichem Nutzlastträger,
- Figur 3: ein Kurvendiagramm für den Betrieb des Fallturms gemäß der Erfindung,
- Figur 4: noch ein weiteres Kurvendiagramm für den Betrieb eines Fallturms gemäß der Erfindung,
- Figur 5: ein weiteres Kurvendiagramm für den Betrieb eines Fallturms gemäß der Erfindung,
- Figur 6: eine schematische Querschnittsansicht einer nicht beanspruchten Beschleunigungskapsel mit darin angeordnetem Nutzlastträger,
- Figur 7a,b: schematische Darstellungen für ein erfindungsgemäßes Dämpfungs- und/oder Federelement,
- Figur 8: eine perspektivische Ansicht eines ersten Ausführungsbeispiels eines Nutzlastträgers,
- Figur 9: eine perspektivische Ansicht eines zweiten Ausführungsbeispiels eines erfindungsgemäßen Nutzlastträgers,
- Figur 10a: eine perspektivische Ansicht eines weiteren Ausführungsbeispiels eines Nutzlastträgers, und
- Figur 10b: eine vierte Ausführungsform eines Nutzlastträgers gemäß der Erfindung.

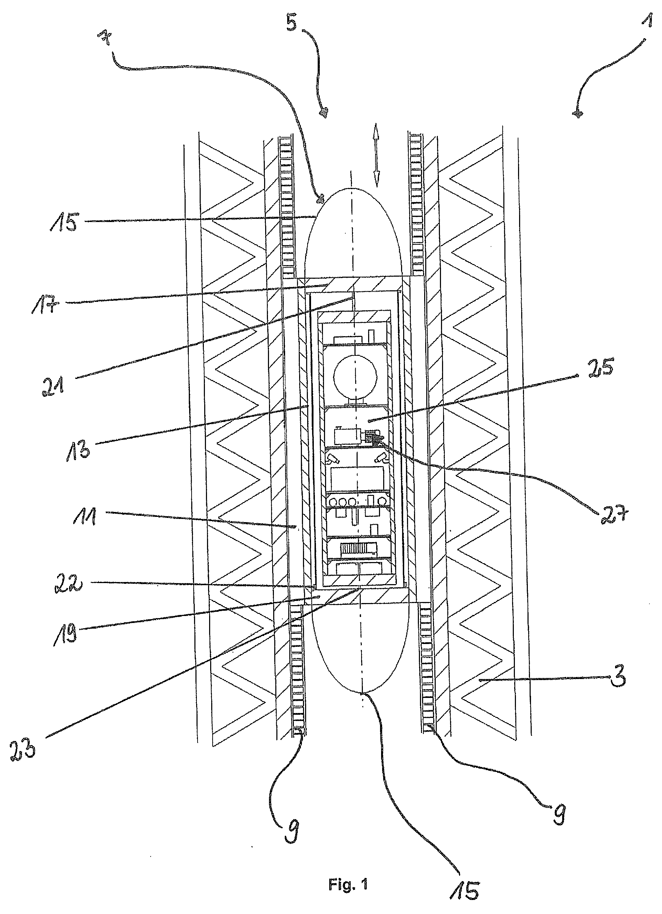

In Figur 1 ist zunächst der prinzipielle Aufbau eines Fallturms 1 gemäß der vorliegenden Erfindung gezeigt. Der Fallturm 1 weist eine Tragstruktur 3 auf, innerhalb derer ein Innenraum 5 des Fallturms ausgebildet ist. In dem Innenraum 5 des Fallturms 1 ist eine Beschleunigungskapsel 7 senkrecht bewegbar angeordnet. Zur senkrechten Bewegung der Beschleunigungskapsel 7 sind mehrere Antriebseinheiten 9 eines geregelten Linearantriebs vorgesehen. In Figur 1 sind zwei gegenüberliegende Antriebseinheiten 9 dargestellt, alternativ ist es bevorzugt, drei, vier oder mehr Antriebseinheiten entlang des Umfangs des Innenraums 5 zu verteilen. Besonders bevorzugt sind die Antriebseinheiten derart entlang des Umfangs der Beschleunigungskapsel bzw. des Turms verteilt, dass mindestens eine Gehäuseseite der Beschleunigungskapsel freibleibt, um einen Zugang zum Kapselinneren an jener Seite bereitstellen zu können. Dies vereinfacht den Beladeund Entladevorgang des Nutzlastträgers. An der äußeren Seitenfläche der Beschleunigungskapsel 7 sind mehrere sekundäre Antriebselemente, sogenannte Antriebsschwerter 11 als Aktoren ausgebildet, die jeweils mit den primären Antriebseinheiten 9 zum geregelten Bewegen der Beschleunigungskapsel 7 zusammenwirken.

Die Beschleunigungskapsel 7 weist eine, vorzugsweise druckdichte, Hülle 13 auf, die einen im Innenraum der Beschleunigungskapsel 7 vorgesehenen Nutzlastträger 25 vollständig umschließt. Die Hülle 13 ist mittels einer oberen Basisplatte 17 und einer unteren Basisplatte 19 verschlossen. Zum Entfernen der oberen oder unteren Basisplatte sind Verschlussmittel vorgesehen, dargestellt ist beispielsweise für die untere Basisplatte 19 ein Schnellverschluss 22.

An der in senkrechter Richtung oberen und unteren Stirnfläche der Beschleunigungskapsel 7 sind jeweils aerodynamische Verkleidungen 15 vorgesehen, die zum Reduzieren des Strömungswiderstands in den Innenraum 5 des Fallturms 1 dienen. Diese aerodynamischen Verkleidungen 15 sind vorzugsweise projektilförmig ausgebildet.

In und an dem Nutzlastträger 25 innerhalb der Beschleunigungskapsel 7 sind Aufbauten 27 für wissenschaftliche Experimente angeordnet bzw. anordenbar. Der Nutzlastträger 25 ist mittels einer Koppeleinrichtung 21, 23 mit der Beschleunigungskapsel 7 reversibel lösbar gekoppelt. Alternativ zu der Anordnung mittels zweier Koppeleinrichtungen 21, 23 ist es denkbar, lediglich eine Koppeleinrichtung 21 am oberen Ende des Nutzlastträgers zwischen diesem und der Beschleunigungskapsel 7 vorzusehen.

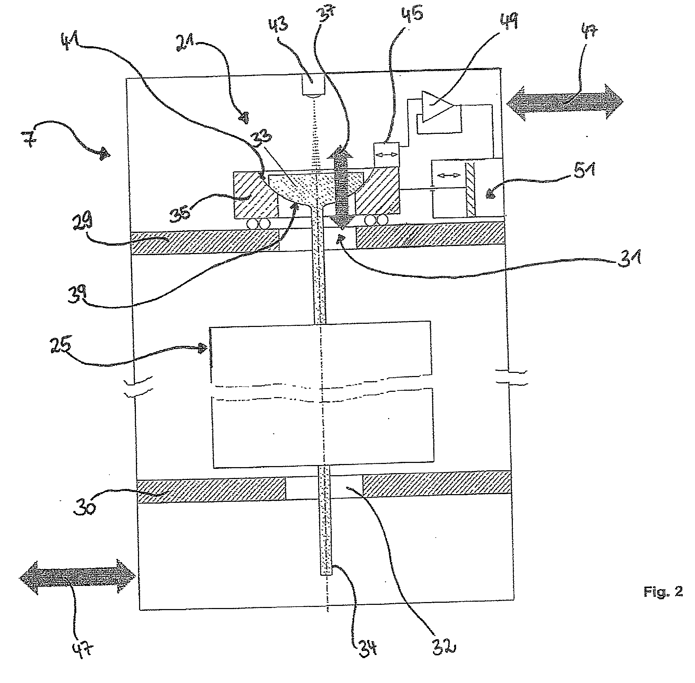

In Figur 2 ist das Zusammenspiel zwischen der Beschleunigungskapsel 7 und dem Nutzlastträger 25 mittels der Koppeleinrichtung 21 schematisch abgebildet. Die Beschleunigungskapsel 7 weist eine Tragebene 29 auf, in welcher eine Ausnehmung 31 vorgesehen ist. In gezeigter Orientierung oberhalb der Tragebene 29 ist die Koppeleinrichtung 21 angebracht. Die Koppeleinrichtung 21 weist ein erstes Koppelglied 33 auf, welches mit dem Nutzlastträger 25 verbunden ist, sowie ein zweites Koppelglied 35, welches mittels der Tragebene 29 mit der Beschleunigungskapsel 7 verbunden ist. Das erste Koppelglied 33 befindet sich mit dem zweiten Koppelglied 35 in Auflage. Durch Anheben nach oben in Richtung des Pfeils 37 ist das erste Koppelglied 33 von dem zweiten Koppelglied 35 entkoppelbar.

Das erste Koppelglied 33 weist eine teilkugelförmige Auflagefläche 39 auf, die dazu eingerichtet ist, mit einer korrespondierend ausgebildeten Fläche 41, vorliegend ausgebildet als teilkugelförmige Ausnehmung, zusammenzuwirken. Der Nutzlastträger 25 ist durch das korrespondierende Zusammenwirken der Flächen 39 und 31 nach Art eines Kugelgelenks lenkbar, soweit der Durchmesser der Ausnehmung 31 das zulässt. Zusätzlich ist im vorliegenden Beispiel noch eine weitere Zugstange unterhalb des Nutzlastträgers 25 angeordnet, welche sich durch eine weitere Ausnehmung 32 einer weiteren Tragebene 30 hindurch erstreckt. Diese schränkt den Schwenkwinkel des Nutzlastträgers 25 relativ zu der Senkrechten ebenfalls ein.

Sofern von dem in Figur 1 dargestellten Linearantrieb eine Antriebskraft in Richtung des Pfeils 37 nach oben auf die Beschleunigungskapsel 7 ausgeübt wird, wird der Nutzlastträger 25 mit der Beschleunigungskapsel 7 gemeinsam nach oben beschleunigt, wofür die Koppeleinrichtung 21 sorgt. Nach Wegfall einer Antriebskraft in Richtung des Pfeils 37 nach oben (entgegen der Schwerkraft) kann sich der Nutzlastträger 25 in Folge der nach oben offenen Gestaltung der Koppeleinrichtung 21 von der Beschleunigungskapsel 7 mechanisch lösen. Die Entkopplung äußert sich in einer Abstandsänderung zwischen dem ersten Koppelglied und dem zweiten Koppelglied, bzw. dem ersten Koppelglied 33 und somit dem Nutzlastträger 25 relativ zu der Beschleunigungskapsel 7. Dies wird erfasst durch einen Sensor 43, welcher als Abstandssensor oder Abstandsänderungssensor ausgebildet sein kann, vorzugsweise als optischer Sensor. Der von diesem Sensor erfasste Abstand bzw. die von diesem Sensor erfasste Abstandsänderung dient als Bezugsgröße für die Regelung der senkrechten Antriebsbewegung der Beschleunigungskapsel 7. Solange die Position des Nutzlastträgers 25 relativ zu der Beschleunigungskapsel 7 in entkoppeltem Zustand berührungsfrei aufrecht erhalten wird, befindet sich der Nutzlastträger 25 im freien Wurf bzw. freien Fall und wird ausschließlich von der Schwerkraft beeinflusst.

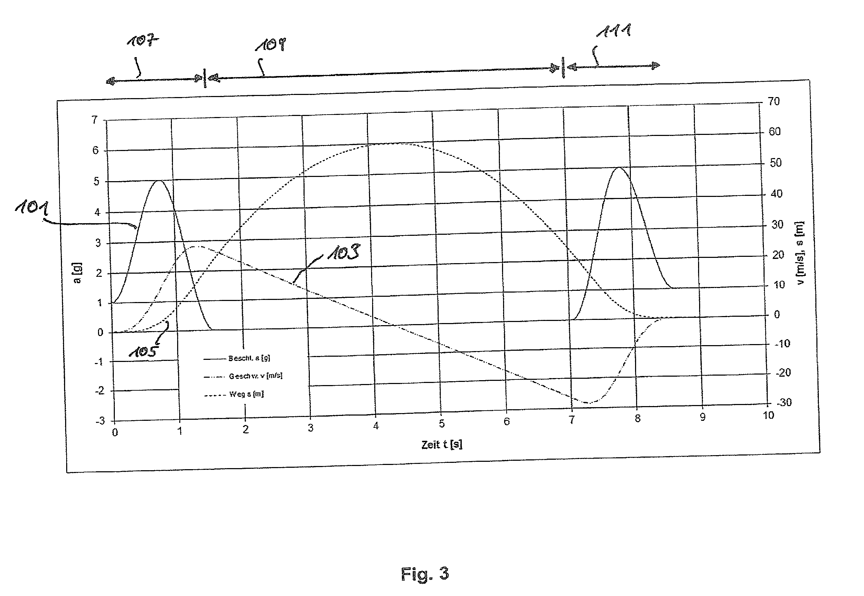

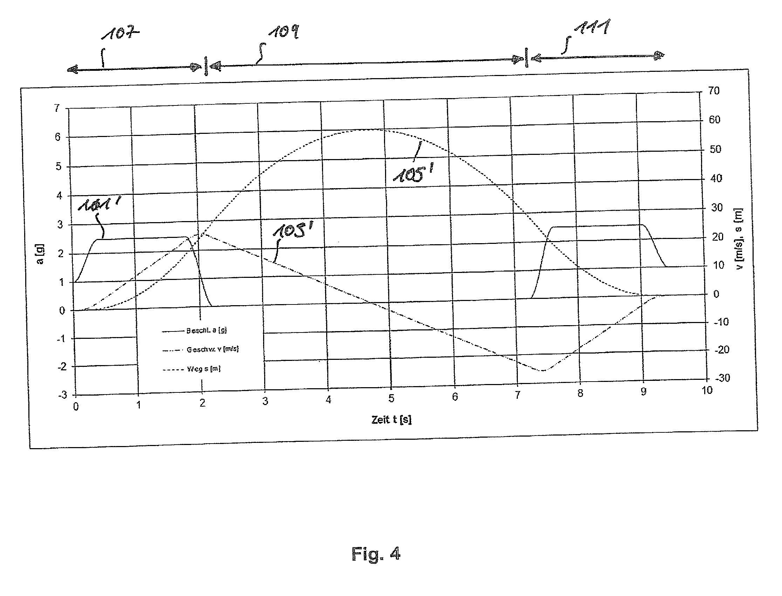

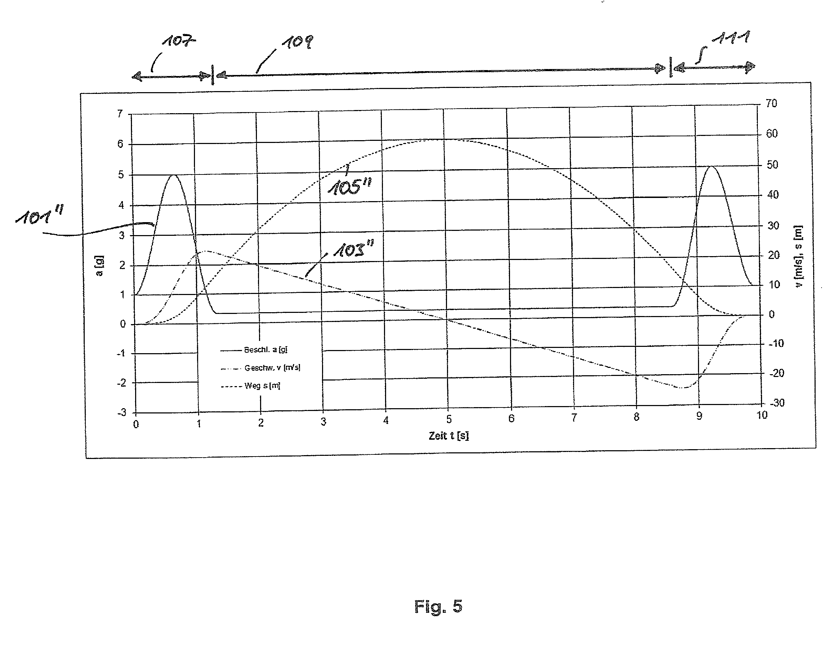

In der Beschleunigungskapsel 7 ist gemäß Figur 2 zusätzlich eine Einrichtung zur Kompensation von horizontalen Störungen vorgesehen. Hierzu ist ein Beschleunigungssensor 45 an dem zweiten Koppelglied 35 angeordnet. Optional können hierfür auch mehrere Beschleunigungssensoren vorgesehen werden. Der Beschleunigungssensor 45 ist dazu eingerichtet, Beschleunigungen in horizontaler Richtung, angedeutet durch die Pfeile 47 zu erfassen, die von außen auf die Beschleunigungskapsel ausgeübt werden. Der Beschleunigungssensor 45 ist mittels eines Signalverstärkers 49 mit einer Einrichtung verbunden, die einen oder mehrere Aktoren 51 aufweist. Der oder die Aktoren 51 sind dazu eingerichtet, das zweite Koppelglied und somit den Nutzlastträger 25 in horizontaler Richtung zu verfahren, vorzugsweise zweiachsig. Hierdurch können auf die Beschleunigungskapsel 7 aufgebrachte Beschleunigungen in horizontaler Richtung kompensiert werden.
Der Betrieb des erfindungsgemäßen Fallturms in verschiedenen Betriebsmodi wird anhand der Figuren 3 bis 5 ersichtlich. Figur 3 stellt zunächst schematisch die Beschleunigungs-, Geschwindigkeits- und Wegverläufe, aufgetragen über die Zeit, dar. Das in Figur 3 gezeigte Diagramm weist eine X-Achse auf, auf der die Zeit t in Sekunden aufgetragen ist, eine erste Y-Achse (links), auf der die von der Antriebskraft des Linearantriebs erzeugte Beschleunigungskomponente a als Vielfaches der Erdbeschleunigung g aufgetragen ist, und eine zweite Y-Achse (rechts), auf der die Geschwindigkeit v in m/s und die Strecke s in m aufgetragen ist. Dies gilt auch für die Diagramme der Figuren 4 und 5. Ebenfalls in allen Figuren 3 bis 5 dargestellt ist eine Aufteilung der zeitlichen Verläufe von Geschwindigkeit, Weg und Beschleunigung in drei Phasen. Hierbei ist eine erste Phase 107 als Beschleunigungsphase gekennzeichnet, eine zweite Phase 109 als Phase mit reduzierter Schwerkraft, und eine dritte Phase 111 als Verzögerungsphase. Im Folgenden wird auf die einzelnen Figuren und die darin abgebildeten Kurvenverläufe eingegangen.

Die in Figur 3 dargestellte Beschleunigung entlang eines zeitlichen Verlaufs ist in Kurve 101 dargestellt. In der ersten Phase 107 nimmt die Beschleunigung zunächst in einem sinoiden Verlauf bis auf einen Maximalwert zu und sodann wieder ab. Zum Zeitpunkt t=0 entspricht die aufgetragene Beschleunigungskomponente a der einfachen Erdbeschleunigung, wodurch die Beschleunigungskapsel im Stillstand gehalten ist. Sodann nimmt die Beschleunigungskomponente a auf bis zu 5 g zu, was in einer Beschleunigung der Beschleunigungskapsel mit vierfacher Erdbeschleunigung entspricht (die Schwerkraft wirkt konstant mit 1 g der Beschleunigungskomponente a entgegen).

In der zweiten Phase 109 beträgt die Beschleunigungskomponente a des Linearantriebs null. Während dieser Phase 109 wirkt auf die Beschleunigungskapsel 7 ausschließlich die Erdbeschleunigung. In der dritten Phase wird die Beschleunigungskapsel 7 verzögert, indem die Beschleunigungskomponente a entgegen der Schwerkraft wieder zunimmt, im vorliegenden Beispiel auf einen Wert von 5 g, wodurch die Beschleunigungskapsel 7 mit vierfacher Erdbeschleunigung entgegen der Schwerkraft verzögert wird, bis am Ende der Phase 111 die Beschleunigungskomponente a 1 g beträgt und die Beschleunigungskapsel 7 im Stillstand hält.

Ausgelöst durch den vorstehend beschriebenen Verlauf der Beschleunigungskurve 101 nimmt der Verlauf der Geschwindigkeit über der Zeit die Form der Kurve 103 an. Die Geschwindigkeit nimmt während der ersten Phase zunächst zu. Die Maximalgeschwindigkeit wird während der ersten Phase 107 erreicht und nimmt ab, sobald die Beschleunigung nach Durchschreiten des Beschteunigungsmaximums den Wert 1 g unterschreitet. Nachdem die Geschwindigkeit ihr Maximum überschritten hat, findet in der zweiten Phase 109 ausgelöst durch die Schwerkraft eine gleichmäßige Geschwindigkeitsabnahme statt, in dieser Konstellation befindet sich aufgrund einer Reduktion der Antriebsbeschleunigung auf 0 g die Beschleunigungskapsel 7 in einem dem freien Fall nachgeführten Geschwindigkeitsverlauf. Der in diesem Zustand entkoppelte Nutzlastträger befindet sich in freiem Fall. In der dritten Phase 111, nachdem die Verzögerung eingesetzt hat, nimmt die Geschwindigkeit nach Durchschreiten eines Geschwindigkeitsminimums wieder zu, und die Beschleunigungskapsel 7 wird bis in den Stillstand abgebremst.

Der Verlauf der Wegänderung über die Zeit folgt der Kurve 105. Dieser Verlauf ergibt sich zwangsläufig aus dem Beschleunigungs- bzw. Geschwindigkeitsverlauf der Kurven 101, 103.

Die in Figur 4 dargestellten Kurvenverläufe der Beschleunigung 101', der Geschwindigkeit 103' und des Weges 105' über der Zeit ähneln prinzipiell den Verläufen aus Figur 3. Im Unterschied zu der Darstellung aus Figur 3 erfolgt die Beschleunigung in der ersten Phase 107 zunächst entlang eines ansteigenden Verlaufs, wird sodann über einen längeren Zeitraum konstant gehalten und fällt gegen Ende der ersten Phase 107 wieder ab. Dies hat zur Folge, dass der Verlauf der Geschwindigkeit entlang der Kurve 103' einen Abschnitt mit gleichmäßig ansteigender Geschwindigkeit aufweist. Das Erreichen der Maximalgeschwindigkeit erfolgt aufgrund nicht zuletzt auch der geringeren Maximalbeschleunigung in einem sanfteren Verlauf. Das gleiche Bild zeigt sich in der dritten Phase 111, in welcher die Beschleunigungskapsel zunächst mit ansteigender Beschleunigung, sodann mit konstanter Beschleunigung und dann wieder mit abnehmender Beschleunigung jeweils bezogen auf die Kraftkomponente des Linearantriebs, verzögert wird.

Auch der Kurvenverlauf, welcher in Figur 5 dargestellt ist, ähnelt strukturell den Kurvenverläufen aus Figur 3. Die Beschleunigung verläuft entlang einer Kurve 101", während die Geschwindigkeit entlang der Kurve 103" verläuft, und der Weg entlang der Kurve 105" über die Zeit aufgetragen ist. Im Unterschied zu den Darstellungen aus Figur 3 und Figur 4 ist die Beschleunigungskomponente des Linearantriebs entgegen der Schwerkraft während der zweiten Phase 109 allerdings nicht auf null herabgesetzt, sondern verbleibt auf einem konstanten Niveau unterhalb 1 g, aber oberhalb null. Hierdurch wird eine gleichmäßige Geschwindigkeitsabnahme während der zweiten Phase 109 eingestellt, die einer Fallgeschwindigkeit bzw. einem Geschwindigkeitsverlauf bei reduzierter Schwerkraft entspricht, wobei die simulierte reduzierte Schwerkraft sich aus der Differenz zwischen der Erdbeschleunigung und der dieser entgegenwirkenden Beschleunigungskomponente a ergibt. In einem Betriebsmodus, wie er in Figur 5 dargestellt ist, findet nach Durchlaufen der Beschleunigungsphase (erste Phase 107) kein Entkoppeln zwischen Nutzlastträger und Beschleunigungskapsel statt. Stattdessen bleibt der Nutzlastträger auch während der zweiten Phase 109 mit der Beschleunigungskapsel gekoppelt, wodurch die verzögerte Fallbewegung ermöglicht wird.

Wenngleich einzelne Aspekte der unterschiedlichen Betriebsmodi hier in unterschiedlichen Figuren für unterschiedliche Szenarien beschrieben worden sind, ist dennoch vorausgesetzt, dass diese unterschiedlichen Merkmale der jeweils verschiedenen Geschwindigkeits-, Beschleunigungs-, oder Wegverläufe auch miteinander kombinierbar sind.

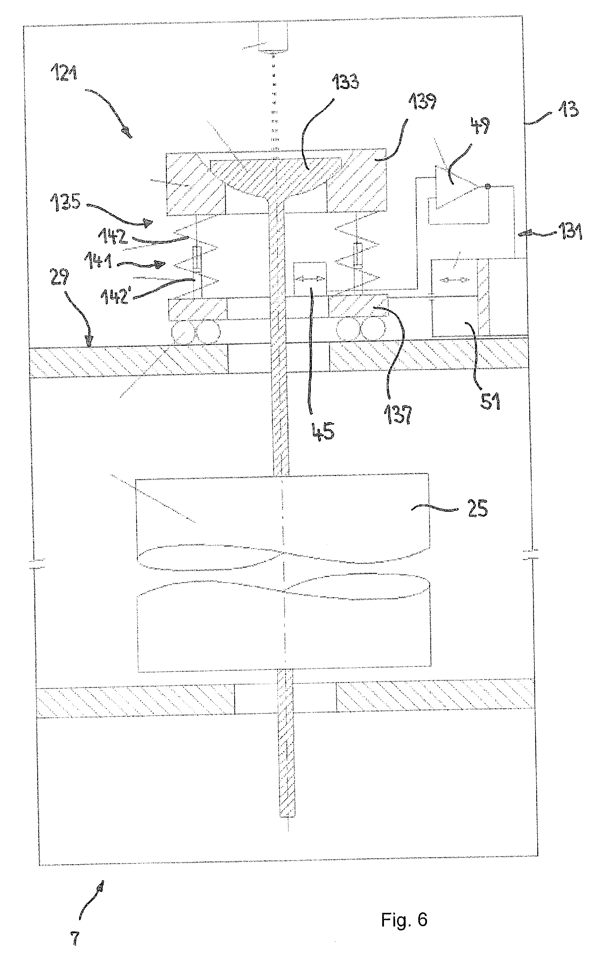

Figur 6 zeigt eine schematische Darstellung einer Koppeleinrichtung 121, weiche ein erstes Koppelglied 133 und ein zweites Koppelglied 135 aufweist. Das erste Koppelglied 133 ist unmittelbar am Nutzlastträger 25 angeordnet und das zweite Koppelglied ist über die Tragebene 29 mit der Beschleunigungskapsel 7 verbunden. Das zweite Koppelglied 135 weist ein oberhalb der Tragebene beweglich geführtes Führungsteil 137 und ein mit dem Führungsteil gekoppeltes Auflagerteil 139 auf. Das Führungsteil 137 und das Auflagerteil 139 sind über ein Dämpfungs- und/oder Federelement 141 in vertikaler Richtung beweglich miteinander verbunden. In einer horizontalen Ebene, also parallel zur Tragebene 29, sind das erste und zweite Koppelglied über das Dämpfungs- und/oder Federelement 141 spielfrei miteinander gekoppelt bzw. verbunden. Das Dämpfungs- und/oder Federelement wird in einer nicht beanspruchten Ausführungsform aus einer Feder 142 und einem Schwingungsdämpfer 142' gebildet. Durch das Dämpfungs- und/oder Federelement 141 werden, wenn das erste Koppelglied 133 während eines Versuches mit seiner teilkugelförmigen Auflagefläche in der Ausnehmung des zweiten Führungsteiles wieder aufsetzt oder eingreift, was immer dann der Fall ist, wenn die vom Linearantrieb geregelte Antriebskraft entgegen der Schwerkraft einen Wert größer 0 annimmt, ungewollte Erschütterungen bzw. Stöße während des Wiederentkoppeins des ersten Koppelgliedes reduziert.

Wie in Figur 2 in ähnlicher Form gezeigt, weist die Darstellung in Figur 6 eine Einrichtung 131 zur Kompensation horizontaler Störungen auf. Am Führungsteil 137 des zweiten Koppelgliedes ist ein Beschleunigungssensor 45 angeordnet, der, wie durch die Pfeile angedeutet, von außen auf die Hülle 13 der Beschleunigungskapsel 7 ausgeübte Beschleunigungen ausgleicht. Der Beschleunigungssensor 45 ist über einen Signalverstärker 49 mit wenigstens einem Aktor 51 verbunden, der das zweite Koppelglied 135 oberhalb der Tragebene 29 in horizontaler Richtung verfährt, vorzugsweise in zwei Achsen.

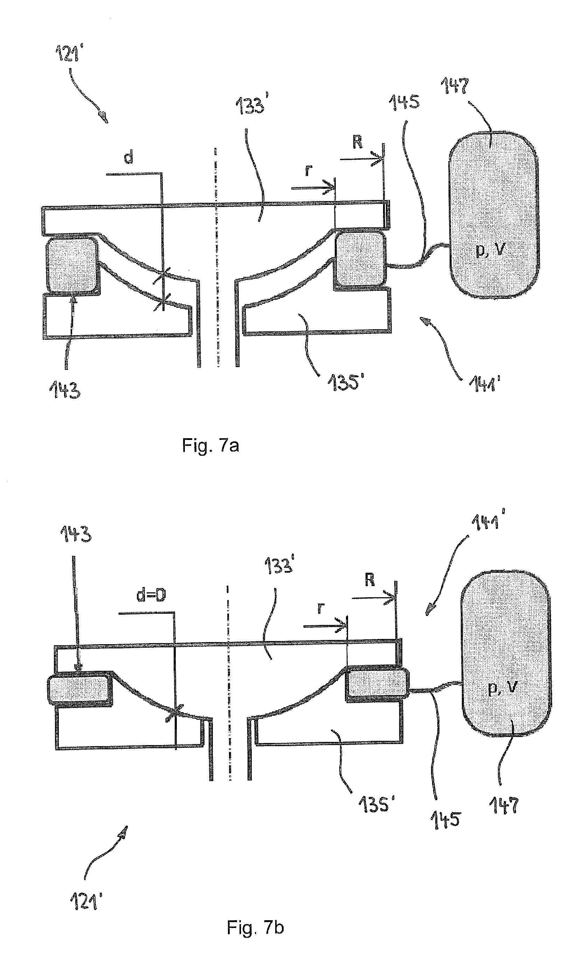

Die Figuren 7a,b zeigen schematische Darstellungen einer Koppeleinrichtung 121' gemäß der vorliegenden Erfindung, mit einem ersten Koppelglied 133' und einem zweiten Koppelglied 135'. Zwischen dem ersten und dem zweiten Koppelglied ist ein als Hohlkörper 143 ausgebildetes Dämpfungs- und/oder Federelement 141' vorgesehen, mit dem eine elastische Kopplung zwischen beiden Koppelgliedern 133' und 135' umgesetzt ist. Wie den Figuren 7a,b zu entnehmen, ist der Hohlkörper 143 über eine Verbindungsleitung 145 fluidleitend, also gas- oder flüssigkeitsleitend, mit einem Speicherbehälter 147 verbunden. In Abhängigkeit von der von dem Linearantrieb geregelten Antriebskraft entgegen der Schwerkraft wird der Hohlkörper 143 mehr oder weniger stark komprimiert, so dass sein Volumen verändert wird und ein Teil des sich im Hohlkörper befindlichen Fluids über die Verbindungsleitung 145 in den Speicherbehälter 147 selbsttätig gefördert wird. Verringert sich die auf das als Hohlkörper 143 ausgebildete Dämpfungs- und/oder Federelement 141' einwirkende Kraft, so verringert sich der Druck innerhalb des Hohlkörpers, so dass das Gas oder die Flüssigkeit aus dem Speicher wieder zurück in das Dämpfungs- und/oder Federelement 141 strömt, so dass sich das Volumen des Hohlkörpers wieder ausdehnt. Sofern die vom Linearantrieb geregelte Antriebskraft entgegen der Schwerkraft einen Wert kleiner oder gleich 0 annimmt, hebt das erste Koppelglied 133' vom Dämpfungs- und/oder Federelement 141 ab.

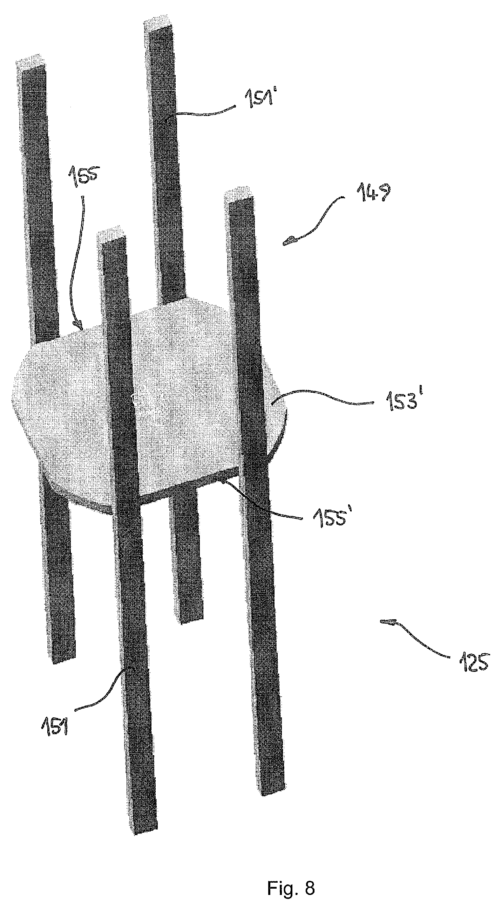

In Figur 8 ist eine erste Ausführungsform eines zum Einsatz kommenden Nutzlastträgers 125 gezeigt, der ein Tragelement 149 aus vier Längsstreben 151, 151' und wenigstens einem Plattenkörper 153 aufweist. Die Längsstreben 151, 151' sind parallel zueinander angeordnet und an einander gegenüberliegenden Längsseiten 155, 155' des Plattenkörpers angeordnet. Der zwischen den Längsstreben angeordnete Plattenkörper dient insbesondere zur Aufnahme verschiedenster Versuchsaufbauten.

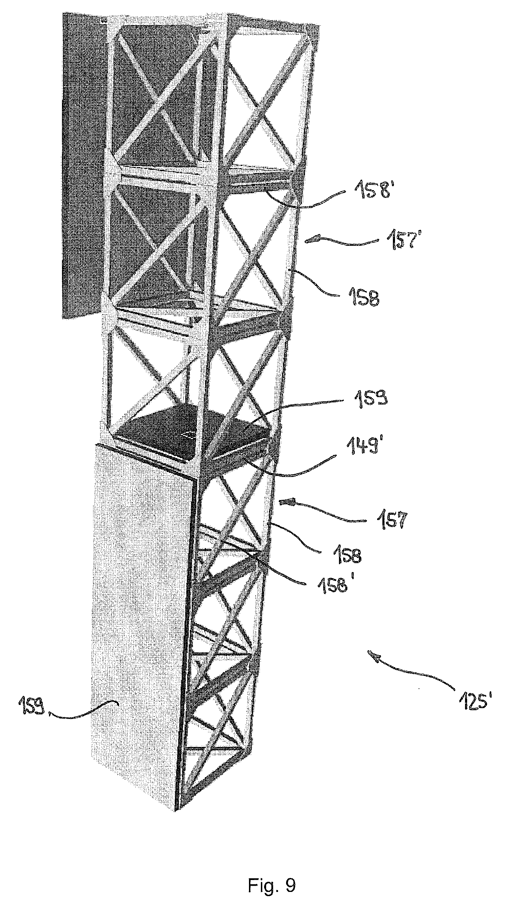

Figur 9 zeigt ein zweite Ausführungsbeispiel eines Nutzlastträgers 125', der ein Trägerelement 149' aufweist, dass eine Gitterstruktur mit einer Vielzahl aneinander gereihter quaderförmiger Gitterteile 157, 157' hat. Jedes Gitterteil 157, 157' weist mehrere Streben 158, 158' auf, welche die Kanten eines jeweiligen Gitterteiles ausbilden und jede Strebe 158, 158' ist an einem ihrer Enden mit wenigstens zwei rechtwinklig dazu angeordneten Streben verbunden. An der Außenseite des aus den Gitterteilen 157, 157' ausgebildeten Trägerelements 149' sind mehrere Plattenkörper 159, 159' angeordnet, auf denen wiederum verschiedenste Versuchsaufbauten montiert werden können.

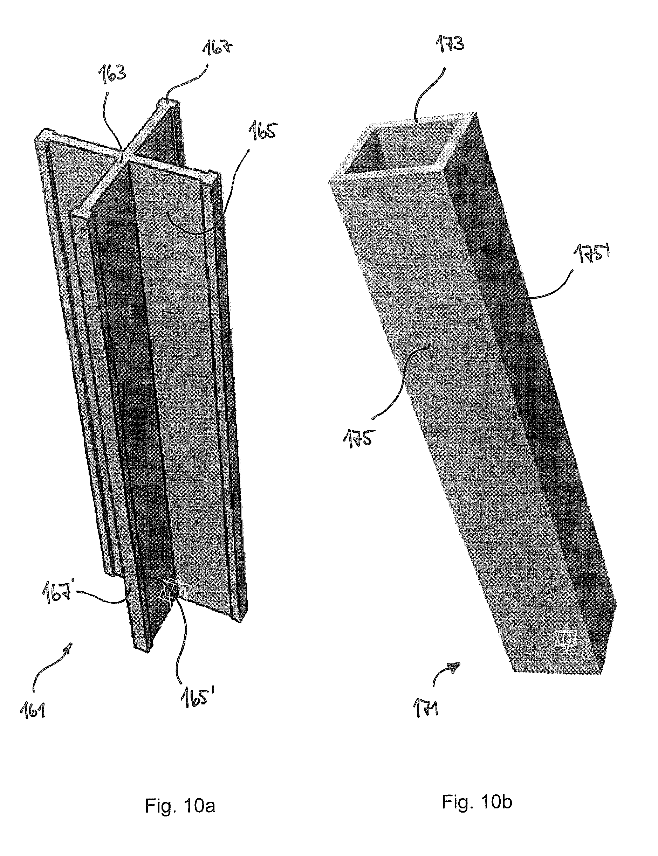

Figur 10a zeigt einen Nutzlastträger 161, auch als Experimententräger bezeichnet, mit einem Trägerelement 163, das aus vier im rechten Winkel um eine Zentralachse des Tragelementes angeordnete Plattenkörper 165, 165' ausgebildet ist. Das Tragelement weist im Querschnitt eine Kreuzform auf. An den radial von der Zentralachse nach außen abstehenden Längsseiten der Plattenkörper 165, 165' sind jeweils Längsstreben 167, 167' angeordnet, welche die Plattenkörper versteifen.

In Figur 10b ist eine vierte Ausführungsform eines Nutzlastträgers 171 gezeigt, der ebenfalls ein Tragelement 173 mit vier parallel zu seiner Zentralachse verlaufende Plattenkörpers 175, 175' aufweist. Jeweils zwei zueinander benachbarte Plattenkörper 175, 175' sind im rechten Winkel zueinander ausgerichtet. Das Tragelement 173 des Nutzlastträgers 171 weist im Querschnitt die Form eines Rechteckes auf.

Die in den Figuren 10a,b gezeigten Nutzlastträger 161, 171 weisen Plattenkörper 165, 165', 173, 173' mit einem Sandwich-Aufbau auf. Jeder Plattenkörper weist ein Kernmaterial und wenigstens zwei die Außenseite des Kernmateriales abdeckende Deckschichten aus beispielsweise einem metallischen Material auf, wie z.B. Aluminium. Das Kernmaterial ist vorzugsweise aus einem Faserwerkstoff, wie z.B. Holz oder aus einem Metall- oder Kunststoffschaum ausgebildet.

## Patentansprüche

1. Fallturm (1), mit
- einem sich in dem Turm (1) erstreckenden Innenraum (5), und
- einem Nutzlastträger (25, 125, 125', 161, 171) für Experimentieraufbauten, der in dem Innenraum (5) in senkrechter Richtung derart beweglich ist, dass während der Bewegung wenigstens zeitweise ein Zustand reduzierter Schwerkraft herrscht,
- einer zum Umschließen des Nutzlastträgers (25, 125, 125', 161, 171) ausgebildeten Beschleunigungskapsel (7), welche mittels eines Linearantriebs senkrecht geregelt bewegbar ist,
**gekennzeichnet durch**
eine Koppeleinrichtung (121, 121'), welche dazu eingerichtet ist, den Nutzlastträger (25, 125, 125', 161, 171) und die Beschleunigungskapsel (7) selbsttätig kraft- und/oder formschlüssig zu koppeln, wenn die von dem Linearantrieb geregelte Antriebskraft entgegen der Schwerkraft einen Wert größer null annimmt, und selbsttätig voneinander zu entkoppeln, wenn die von dem Linearantrieb geregelte Antriebskraft entgegen der Schwerkraft einen Wert kleiner oder gleich null annimmt,
wobei die Koppeleinrichtung (121, 121') ein Dämpfungs- und/oder Federelement (141, 141') aufweist, wobei der Nutzlastträger (25, 125, 125', 161, 171) mittels des Dämpfungs- und/oder Federelementes (141, 141') Beschleunigungskräfte aufnehmend mit der Beschleunigungskapsel (7) koppelbar ist, und
wobei das Dämpfungs- und/oder Federelement (141, 141') als Verformungskörper ausgebildet ist, der in Abhängigkeit der auf ihn einwirkenden Beschleunigungskräfte komprimierbar und dekomprimierbar ist, und wobei der Verformungskörper ein Hohlkörper (143) ist, der einen Anschluss für eine fluidleitende Verbindungsleitung (145) mit einem Speicherbehälter (147) aufweist.

2. Fallturm nach Anspruch 1,
**dadurch gekennzeichnet, dass** der Linearantrieb einen oder mehrere Linearmotoren, vorzugsweise Langstator-Linearmotoren, aufweist, wobei die Beschleunigungskapsel als Aktor ausgebildet ist oder eine korrespondierende Anzahl von Aktoren aufweist.

3. Fallturm nach einem der Ansprüche 1 und 2,
**dadurch gekennzeichnet, dass** der Linearantrieb dazu eingerichtet ist, eine Antriebskraft entgegen der Schwerkraft auf die Beschleunigungskapsel (7) aufzubringen und in drei oder mehr zeitlich aufeinanderfolgenden Phasen derart zu regeln, dass die Beschleunigungskapsel
- in einer ersten Phase entgegen der Schwerkraft auf eine Initialgeschwindigkeit v₀ beschleunigt wird oder in eine Initialhöhe verfahren wird, in der v₀ den Wert null annimmt,
- in einer zweiten Phase gleichmäßig in Richtung der Schwerkraft bis zum Erreichen einer Endgeschwindigkeit v₁ beschleunigt wird, und
- in einer dritten Phase entgegen der Schwerkraft von v₁ in den Stillstand verzögert wird.

4. Fallturm nach Anspruch 3,
**dadurch gekennzeichnet, dass** der Linearantrieb dazu eingerichtet ist, die Antriebskraft in der zweiten Phase derart zu regeln, dass die Beschleunigung der Beschleunigungskapsel (7) in Richtung der Schwerkraft in einem Bereich unterhalb einfacher Erdbeschleunigung und oberhalb null liegt.

5. Fallturm nach einem der Ansprüche 3 und 4,
**dadurch gekennzeichnet, dass** der Linearantrieb dazu eingerichtet ist, die Antriebskraft derart zu regeln, dass diese in der ersten und/oder dritten Phase entgegen der Schwerkraft in einem ersten Zeitabschnitt einen ansteigenden Verlauf nimmt, in einem zweiten Abschnitt einen im Wesentlichen konstanten Wert annimmt, und in einem dritten Abschnitt einen abnehmenden Verlauf nimmt.

6. Fallturm nach einem der Ansprüche 1 bis 5,
**dadurch gekennzeichnet, dass** die Koppeleinrichtung (21, 121, 121') ein mit dem Nutzlastträger (25, 125, 125', 161, 171) verbundenes erstes Koppelglied (33, 133, 133'), und ein mit der Beschleunigungskapsel verbundenes zweites Koppelglied (35, 135, 135') aufweist, wobei das erste Koppelglied (33, 133, 133') mit dem zweiten Koppelglied (35, 135, 135') in Auflage bringbar ist.

7. Fallturm nach Anspruch 6,
**dadurch gekennzeichnet, dass** das erste Koppelglied (33, 133, 133') eine kugelförmige oder teilkugelförmige Auflagefläche (39) aufweist, und dass vorzugsweise das zweite Koppelglied (35, 135, 135') eine korrespondierend geformte Vertiefung zur Aufnahme der Auflagefläche (39) aufweist.

8. Fallturm nach einem der vorstehenden Ansprüche,
**dadurch gekennzeichnet, dass** das Dämpfungs- und/oder Federelement (141, 141') zwischen dem ersten Koppelglied (133, 133') und dem zweiten Koppelglied (135, 135') angeordnet ist.

9. Fallturm nach einem der vorstehenden Ansprüche,
**dadurch gekennzeichnet, dass** in der Verbindungsleitung (145) eine Fördereinrichtung, vorzugsweise eine Förderpumpe, für eine gesteuerte Volumenänderung des Hohlkörpers (143) angeordnet ist.

10. Fallturm nach einem der Ansprüche 6 bis 9,
**dadurch gekennzeichnet, dass** das zweite Koppelglied (35, 135) in horizontaler Richtung vorzugsweise zweiachsig, verfahrbar ist.

11. Fallturm nach Anspruch 10,
**dadurch gekennzeichnet, dass** zum Verfahren des zweiten Koppelglieds (35, 135) ein oder mehrere Aktoren (51) vorgesehen sind, wobei
- das zweite Koppelglied (35, 135) und/oder die Beschleunigungskapsel (7) vorzugsweise einen oder mehrere Beschleunigungssensoren (45) zur Erfassung einer Beschleunigung in horizontaler Richtung aufweisen, und
- wobei die Aktoren (51) vorzugsweise dazu eingerichtet sind, das zweite Koppelglied (35, 135) in Abhängigkeit der erfassten horizontalen Beschleunigung zu verfahren.

12. Beschleunigungskapsel (7) zur Verwendung in einem Fallturm (1) nach einem der vorstehenden Ansprüche , umfassend eine Koppeleinrichtung, wobei in der Beschleunigungskapsel (7) ein Nutzlastträger (25, 125, 125', 161, 171) angeordnet ist und mittels der Koppeleinrichtung (21, 121) mit der Beschleunigungskapsel (7) koppelbar ist, **dadurch gekennzeichnet, dass** die Koppeleinrichtung (21, 121) dazu eingerichtet ist,
- den Nutzlastträger (25, 125, 125', 161, 171) und die Beschleunigungskapsel (7) selbsttätig kraft- und/oder formschlüssig zu koppeln, wenn die von dem Linearantrieb des Fallturms (1) geregelte Antriebskraft entgegen der Schwerkraft einen Wert größer null annimmt, und
- den Nutzlastträger (25, 125, 125', 161, 171) und die Beschleunigungskapsel (7) selbsttätig voneinander zu entkoppeln, wenn die von dem Linearantrieb geregelte Antriebskraft entgegen der Schwerkraft einen Wert kleiner oder gleich null annimmt, und
wobei die Koppeleinrichtung (121, 121') ein Dämpfungs- und/oder Federelement (141, 141') aufweist, wobei der Nutzlastträger (25, 125, 125', 161, 171) mittels des Dämpfungs- und/oder Federelementes (141, 141') Beschleunigungskräfte aufnehmend mit der Beschleunigungskapsel (7) koppelbar ist, und
wobei das Dämpfungs- und/oder Federelement (141, 141') als Verformungskörper ausgebildet ist, der in Abhängigkeit der auf ihn einwirkenden Beschleunigungskräfte komprimierbar und dekomprimierbar ist, und wobei der Verformungskörper ein Hohlkörper (143) ist, der einen Anschluss für eine fluidleitende Verbindungsleitung (145) mit einem Speicherbehälter (147) aufweist.

13. Nutzlastträger (25, 125, 125', 161, 171) zur Verwendung in einem Fallturm (1) nach einem der Ansprüche 1 bis 11, umfassend eine Koppeleinrichtung, wobei der Nutzlastträger (25, 125, 125', 161, 171) mittels der Koppeleinrichtung (21, 121) mit einer Beschleunigungskapsel (7), insbesondere einer Beschleunigungskapsel nach Anspruch 12, koppelbar ist, **dadurch gekennzeichnet, dass** die Koppeleinrichtung (21, 121) dazu eingerichtet ist,
- den Nutzlastträger (25, 125, 125', 161, 171) und die Beschleunigungskapsel (7) selbsttätig kraft- und/oder formschlüssig zu koppeln, wenn die von einem Linearantrieb des Fallturms geregelte Antriebskraft entgegen der Schwerkraft einen Wert größer null annimmt, und
- den Nutzlastträger (25, 125, 125', 161, 171) und die Beschleunigungskapsel (7) selbsttätig voneinander zu entkoppeln, wenn die von dem Linearantrieb geregelte Antriebskraft entgegen der Schwerkraft einen Wert kleiner oder gleich null annimmt, und
wobei die Koppeleinrichtung (121, 121') ein Dämpfungs- und/oder Federelement (141, 141') aufweist, wobei der Nutzlastträger (25, 125, 125', 161, 171) mittels des Dämpfungs- und/oder Federelementes (141, 141') Beschleunigungskräfte aufnehmend mit der Beschleunigungskapsel (7) koppelbar ist, und
wobei das Dämpfungs- und/oder Federelement (141, 141') als Verformungskörper ausgebildet ist, der in Abhängigkeit der auf ihn einwirkenden Beschleunigungskräfte komprimierbar und dekomprimierbar ist, und wobei der Verformungskörper ein Hohlkörper (143) ist, der einen Anschluss für eine fluidleitende Verbindungsleitung (145) mit einem Speicherbehälter (147) aufweist.

14. Nutzlastträger nach Anspruch 13,
**gekennzeichnet durch** ein Trägerelement (149, 149', 163), welche parallel zueinander ausgerichtete Längsstützen und etwa quer zu den Längsstützen verlaufende Plattenkörper (159, 159', 165, 165') aufweist, wobei die Längsstützen an der Umfangsfläche der Plattenkörper angeordnet sind.

## Claims

1. Drop tower (1) having
- an inner space (5) which extends in the tower (1), and
- a payload carrier (25, 125, 125', 161, 171) for experimental constructions which can be moved in the inner space (5) in a vertical direction in such a manner that during the movement a state of reduced gravitational force exists at least temporarily,
- an acceleration capsule (7) which is constructed to surround the payload carrier (25, 125, 125', 161, 171) and which can be moved so as to be controlled in a vertical manner by means of a linear drive,
**characterised by**
a coupling device (121, 121') which is configured to automatically couple the payload carrier (25, 125, 125', 161, 171) and the acceleration capsule (7) in a positive-locking and/or non-positive-locking manner when the drive force which is controlled by the linear drive counter to gravitational force assumes a value greater than zero and to automatically decouple them from each other when the drive force controlled by the linear drive counter to gravitational force assumes a value which is less than or equal to zero,
wherein the coupling device (121, 121') has a damping and/or resilient element (141, 141'), wherein the payload carrier (25, 125, 125', 161, 171) can be coupled by means of the damping and/or resilient element (141, 141') to the acceleration capsule (7) so as to absorb acceleration forces, and
wherein the damping and/or resilient element (141, 141') is constructed as a deformation member which can be compressed and decompressed in accordance with the acceleration forces acting thereon, and wherein the deformation member is a hollow member (143) which has a connection for a fluid-conducting connection line (145) to a storage container (147).

2. Drop tower according to claim 1,
**characterised in that** the linear drive has one or more linear motors, preferably long-stator linear motors, wherein the acceleration capsule is constructed as an actuator or has a corresponding number of actuators.

3. Drop tower according to either claim 1 or claim 2,
**characterised in that** the linear drive is configured to apply a drive force counter to gravitational force to the acceleration capsule (7) and to control it in three or more temporally sequential phases in such a manner that the acceleration capsule
- is accelerated in a first phase counter to gravitational force to an initial speed v₀ or is moved to an initial height at which v₀ assumes the value zero,
- is accelerated in a second phase in a uniform manner in the direction of gravitational force until a final speed v₁ is reached, and
- is decelerated in a third phase counter to gravitational force from v₁ to the stopped state.

4. Drop tower according to claim 3,
**characterised in that** the linear drive is configured to control the drive force in the second phase in such a manner that the acceleration of the acceleration capsule (7) in the direction of gravitational force is in a range below simple gravitational acceleration and above zero.

5. Drop tower according to either claim 3 or claim 4,
**characterised in that** the linear drive is configured to control the drive force in such a manner that it takes in the first and/or third phase counter to gravitational force in a first time portion an ascending path, in a second portion assumes a substantially constant value, and in a third portion takes a descending path.

6. Drop tower according to any one of claims 1 to 5,
**characterised in that** the coupling device (21, 121, 121') has a first coupling member (33, 133, 133') which is connected to the payload carrier (25, 125, 125', 161, 171) and a second coupling member (35, 135, 135') which is connected to the acceleration capsule, wherein the first coupling member (33, 133, 133') can be brought into abutment with the second coupling member (35, 135, 135').

7. Drop tower according to claim 6,
**characterised in that** the first coupling member (33, 133, 133') has a spherical or partially spherical abutment face (39) and **in that** the second coupling member (35, 135, 135') preferably has a correspondingly shaped recess for receiving the abutment face (39).

8. Drop tower according to any one of the preceding claims,
**characterised in that** the damping and/or resilient element (141, 141') is arranged between the first coupling member (133, 133') and the second coupling member (135, 135').

9. Drop tower according to any one of the preceding claims,
**characterised in that** a conveying device, preferably a delivery pump, is arranged in the connection line (145) for controlled volume change of the hollow member (143).

10. Drop tower according to any one of claims 6 to 9,
**characterised in that** the second coupling member (35, 135) can be moved in a horizontal direction, preferably in a biaxial manner.

11. Drop tower according to claim 10,
**characterised in that**, in order to move the second coupling member (35, 135), one or more actuators (51) is/are provided, wherein
- the second coupling member (35, 135) and/or the acceleration capsule (7) preferably has/have one or more acceleration sensor(s) (45) for detecting an acceleration in the horizontal direction, and
- wherein the actuators (51) are preferably configured to move the second coupling member (35, 135) in accordance with the detected horizontal acceleration.

12. Acceleration capsule (7) for use in a drop tower (1) according to any one of the preceding claims,
comprising a coupling device, wherein
a payload carrier (25, 125, 125', 161, 171) is arranged in the acceleration capsule (7) and can be coupled to the acceleration capsule (7) by means of the coupling device (21, 121), **characterised in that** the coupling device (21, 121) is configured
- to automatically couple the payload carrier (25, 125, 125', 161, 171) and the acceleration capsule (7) in a positive-locking and/or non-positive-locking manner when the drive force which is controlled by the linear drive of the drop tower (1) counter to gravitational force assumes a value greater than zero and
- to automatically decouple the payload carrier (25, 125, 125', 161, 171) and the acceleration capsule (7) from each other when the drive force controlled by the linear drive counter to gravitational force assumes a value which is less than or equal to zero, and
wherein the coupling device (121, 121') has a damping and/or resilient element (141, 141'), wherein the payload carrier (25, 125, 125', 161, 171) can be coupled by means of the damping and/or resilient element (141, 141') to the acceleration capsule (7) so as to absorb acceleration forces, and
wherein the damping and/or resilient element (141, 141') is constructed as a deformation member which can be compressed and decompressed in accordance with the acceleration forces acting thereon, and wherein the deformation member is a hollow member (143) which has a connection for a fluid-conducting connection line (145) to a storage container (147).

13. Payload carrier (25, 125, 125', 161, 171) for use in a drop tower (1) according to any one of claims 1 to 11,
comprising a coupling device, wherein
the payload carrier (25, 125, 125', 161, 171) can be coupled by means of the coupling device (21, 121) to an acceleration capsule (7), in particular an acceleration capsule according to claim 12, **characterised in that** the coupling device (21, 121) is configured
- to automatically couple the payload carrier (25, 125, 125', 161, 171) and the acceleration capsule (7) in a positive-locking and/or non-positive-locking manner when the drive force which is controlled by a linear drive of the drop tower counter to gravitational force assumes a value greater than zero and
- to automatically decouple the payload carrier (25, 125, 125', 161, 171) and the acceleration capsule (7) from each other when the drive force controlled by the linear drive counter to gravitational force assumes a value which is less than or equal to zero, and
wherein the coupling device (121, 121') has a damping and/or resilient element (141, 141'), wherein the payload carrier (25, 125, 125', 161, 171) can be coupled by means of the damping and/or resilient element (141, 141') to the acceleration capsule (7) so as to absorb acceleration forces, and
wherein the damping and/or resilient element (141, 141') is constructed as a deformation member which can be compressed and decompressed in accordance with the acceleration forces acting thereon, and wherein the deformation member is a hollow member (143) which has a connection for a fluid-conducting connection line (145) to a storage container (147).

14. Payload carrier according to claim 13,
**characterised by** a carrier element (149, 149', 163) which has longitudinal supports which are orientated parallel with each other and plate members (159, 159', 165, 165') which extend substantially transversely relative to the longitudinal supports, wherein the longitudinal supports are arranged on the peripheral face of the plate members.

## Revendications

1. Tour de chute (1), comprenant
- un espace intérieur (5) s'étendant dans la tour (1) et
- un support de charge utile (25, 125, 125', 161, 171) pour des structures d'expérimentation, lequel est mobile dans l'espace intérieur (5) dans une direction perpendiculaire de telle manière qu'il règne, au cours du déplacement, au moins par intermittence, un état à force de gravité réduite,
- une capsule d'accélération (7) réalisée afin d'entourer le support de charge utile (25, 125, 125', 161, 171), laquelle peut être déplacée de manière réglée de manière perpendiculaire, au moyen d'un entraînement linéaire,
**caractérisée par**
un dispositif de couplage (121, 121'), qui est mis au point afin de coupler à force et/ou par complémentarité de forme de manière autonome le support de charge utile (25, 125, 125', 161, 171) et la capsule d'accélération (7) lorsque la force d'entraînement réglée par l'entraînement linéaire prend, dans le sens contraire à la force de gravité, une valeur supérieure à zéro, et afin de les découpler l'un de l'autre de manière autonome lorsque la force d'entraînement réglée par l'entraînement linéaire prend, dans le sens contraire à la force de gravité, une valeur inférieure ou égale à zéro,
dans laquelle le dispositif de couplage (121, 121') présente un élément d'amortissement et/ou un élément formant ressort (141, 141'), dans laquelle le support de charge utile (25, 125, 125', 161, 171) peut être couplé à la capsule d'accélération (7) tout en absorbant des forces d'accélération au moyen de l'élément d'amortissement et/ou de l'élément formant ressort (141, 141'), et
dans laquelle l'élément d'amortissement et/ou l'élément formant ressort (141, 141') est réalisé sous la forme d'un corps de déformation, qui peut être compressé et décompressé en fonction des forces d'accélération agissant sur lui, et dans laquelle le corps de déformation est un corps creux (143), qui présente un raccordement pour une ligne de liaison (145) acheminant des fluides à un réservoir de stockage (147).

2. Tour de chute selon la revendication 1,
**caractérisée en ce que** l'entraînement linéaire présente un ou plusieurs moteurs linéaires, de préférence des moteurs linéaires à stator long, dans laquelle la capsule d'accélération est réalisée sous la forme d'un actionneur ou présente un nombre correspondant d'actionneurs.

3. Tour de chute selon l'une quelconque des revendications 1 et 2,
**caractérisée en ce que** l'entraînement linéaire est mis au point afin d'appliquer une force d'entraînement contraire à la force de gravité sur la capsule d'accélération (7) et afin de la régler en trois phases ou plus se suivant dans le temps de telle manière que la capsule d'accélération
- est accélérée, lors d'une première phase, dans le sens contraire à la force de gravité sur une vitesse initiale v₀ ou est déplacée à une hauteur initiale, à laquelle v₀ prend la valeur zéro,
- est accélérée, lors d'une deuxième phase, de manière homogène en direction de la force de gravité jusqu'à atteindre une vitesse finale v₁, et
- est décélérée, lors d'une troisième phase, dans le sens contraire à la force de gravité de v₁ pour venir à l'arrêt.

4. Tour de chute selon la revendication 3,
**caractérisée en ce que** l'entraînement linéaire est mis au point afin de régler la force d'entraînement, lors de la deuxième phase, de telle manière que l'accélération de la capsule d'accélération (7) en direction de la force de gravité se trouve dans une plage inférieure à la simple accélération terrestre et supérieure à zéro.

5. Tour de chute selon l'une quelconque des revendications 3 et 4,
**caractérisée en ce que** l'entraînement linéaire est mis au point afin de régler la force d'entraînement de telle manière que cette dernière prend, lors de la première et/ou de la troisième phase, dans le sens contraire à la force de gravité, lors d'un premier laps de temps, une courbe ascendante, prend, dans un deuxième laps de temps, une valeur essentiellement constante, et prend, lors d'un troisième laps de temps, une courbe descendante.

6. Tour de chute selon l'une quelconque des revendications 1 à 5,
**caractérisée en ce que** le dispositif de couplage (21, 121, 121') présente un premier organe de couplage (33, 133, 133') relié au support de charge utile (25, 125, 125', 161, 171) et un deuxième organe de couplage (35, 135, 135') relié à la capsule d'accélération, dans laquelle le premier organe de couplage (33, 133, 133') peut être amené en appui avec le deuxième organe de couplage (35, 135, 135').

7. Tour de chute selon la revendication 6,
**caractérisée en ce que** le premier organe de couplage (33, 133, 133') présente une surface d'appui (39) de forme sphérique ou de forme partiellement sphérique, et **en ce que** de préférence le deuxième organe de couplage (35, 135, 135') présente un renforcement formé de manière correspondante servant à recevoir la surface d'appui (39).

8. Tour de chute selon l'une quelconque des revendications précédentes,
**caractérisée en ce que** l'élément d'amortissement et/ou l'élément formant ressort (141, 141') est disposé entre le premier organe de couplage (133, 133') et le deuxième organe de couplage (135, 135').

9. Tour de chute selon l'une quelconque des revendications précédentes,
**caractérisée en ce qu'**un dispositif de refoulement, de préférence une pompe de refoulement, en vue d'une modification commandée de volume du corps creux (143) est disposé dans la ligne de liaison (145).

10. Tour de chute selon l'une quelconque des revendications 6 à 9,
**caractérisée en ce que** le deuxième organe de couplage (35, 135) peut être déplacé dans une direction horizontale, de préférence de manière biaxiale.

11. Tour de chute selon la revendication 10,
**caractérisée en ce que**, aux fins du déplacement du deuxième organe de couplage (35, 135), un ou plusieurs actionneurs (51) sont prévus, dans laquelle
- le deuxième organe de couplage (35, 135) et/ou la capsule d'accélération (7) présentent de préférence un ou plusieurs capteurs d'accélération (45) servant à détecter une accélération dans une direction horizontale, et
- dans laquelle les actionneurs (51) sont mis au point de préférence afin de déplacer le deuxième organe de couplage (35, 135) en fonction de l'accélération horizontale détectée.

12. Capsule d'accélération (7) destinée à être utilisée dans une tour de chute (1) selon l'une quelconque des revendications précédentes,
comprenant un dispositif de couplage, dans laquelle
un support de charge utile (25, 125, 125', 161, 171) est disposé dans la capsule d'accélération (7) et peut être couplé à la capsule d'accélération (7) au moyen du dispositif de couplage (21, 121), **caractérisée en ce que** le dispositif de couplage (21, 121) est mis au point afin
- de coupler à force et/ou par complémentarité de forme, de manière autonome, le support de charge utile (25, 125, 125', 161, 171) et la capsule d'accélération (7) lorsque la force d'entraînement réglée par l'entraînement linéaire de la tour de chute (1) prend, dans le sens contraire à la force de gravité, une valeur supérieure à zéro, et
- de découpler l'un de l'autre de manière autonome le support de charge utile (25, 125, 125', 161, 171) et la capsule d'accélération (7) lorsque la force d'entraînement réglée par l'entraînement linéaire prend, dans le sens contraire à la force de gravité, une valeur inférieure ou égale à zéro, et
dans laquelle le dispositif de couplage (121, 121') présente un élément d'amortissement et/ou un élément formant ressort (141, 141'), dans laquelle le support de charge utile (25, 125, 125', 161, 171) peut être couplé à la capsule d'accélération (7) tout en absorbant des forces d'accélération au moyen de l'élément d'amortissement et/ou de l'élément formant ressort (141, 141'), et
dans laquelle l'élément d'amortissement et/ou l'élément formant ressort (141, 141') est réalisé sous la forme d'un corps de déformation, qui peut être compressé et décompressé en fonction des forces d'accélération agissant sur lui, et dans laquelle le corps de déformation est un corps creux (143), qui présente un raccordement pour une ligne de liaison (145) acheminant des fluides à un réservoir de stockage (147).

13. Support de charge utile (25, 125, 125', 161, 171) destiné à être utilisé dans une tour de chute (1) selon l'une quelconque des revendications 1 à 11,
comprenant un dispositif de couplage, dans lequel
le support de charge utile (25, 125, 125', 161, 171) peut être couplé, au moyen du dispositif de couplage (21, 121), à une capsule d'accélération (7), en particulier à une capsule d'accélération selon la revendication 12, **caractérisé en ce que** le dispositif de couplage (21, 121) est mis au point afin
- de coupler à force et/ou par complémentarité de forme, de manière autonome, le support de charge utile (25, 125, 125', 161, 171) et la capsule d'accélération (7) lorsque la force d'entraînement réglée par un entraînement linéaire de la tour de chute prend, dans le sens contraire à la force de gravité, une valeur supérieure à zéro, et
- de découpler l'un de l'autre de manière autonome le support de charge utile (25, 125, 125', 161, 171) et la capsule d'accélération (7) lorsque la force d'entraînement réglée par l'entraînement linéaire prend, dans le sens contraire à la force de gravité, une valeur inférieure ou égale à zéro, et
dans lequel le dispositif de couplage (121, 121') présente un élément d'amortissement et/ou un élément formant ressort (141, 141'), dans lequel le support de charge utile (25, 125, 125', 161, 171) peut être couplé à la capsule d'accélération (7) tout en absorbant des forces d'accélération au moyen de l'élément d'amortissement et/ou de l'élément formant ressort (141, 141'), et
dans lequel l'élément d'amortissement et/ou l'élément formant ressort (141, 141') est réalisé sous la forme d'un corps de déformation, qui peut être compressé et décompressé en fonction des forces d'accélération agissant sur lui, et dans lequel le corps de déformation est un corps creux (143), qui présente un raccordement pour une ligne de liaison (145) acheminant des fluides à un réservoir de stockage (147).

14. Support de charge utile selon la revendication 13,
**caractérisé par** un élément de support (149, 149', 163), qui présente des montants longitudinaux orientés les uns par rapport aux autres de manière parallèle et des corps de panneau (159, 159', 165, 165') s'étendant à peu près de manière transversale par rapport aux montants longitudinaux, dans lequel les montants longitudinaux sont disposés au niveau de la surface périphérique des corps de panneau.
